# EUROPÄISCHE PATENTSCHRIFT

(11) **EP 3 180 139 B1**
(45) Veröffentlichungstag und Bekanntmachung des Hinweises auf die Patenterteilung: **11.10.2023**
(21) Anmeldenummer: 15750020.8
(22) Anmeldetag: 04.08.2015
(51) Int. Cl.: B21D 28/12, B21D 28/36, B23G 3/00

(54) **MEHRFACHWERKZEUG**
MULTIPLE-USE TOOL
OUTIL MULTIPLE

(30) Priorität: 12.08.2014 DE 102014215951; 26.11.2014 DE 102014224094
(43) Veröffentlichungstag der Anmeldung: 21.06.2017
(73) Patentinhaber: Pass Stanztechnik AG, 95473 Creussen (DE)
(72) Erfinder: KRAFT, Stefan, 91289 Schnabelwaid (DE)
(74) Vertreter: Rau, Schneck & Hübner Patentanwälte Rechtsanwälte PartGmbB
(86) Internationale Anmeldenummer: PCT/EP2015/067940
(87) Internationale Veröffentlichungsnummer: WO 2016/023794

(56) Entgegenhaltungen:
- DE-U1-202014 001 657
- GB-A- 190 707 916
- JP-A- 2002 103 140
- JP-A- 2010 017 797
- US-A- 5 615 471

## Beschreibung

Die Erfindung betrifft ein Mehrfachwerkzeug für eine Stanzvorrichtung, insbesondere für eine Revolverstanzpresse, gemäß dem Oberbegriff des Anspruch 1.

Ein solches Mehrfachwerkzeug ist aus JP 2010 017797 A bekannt. Derartige Mehrfachwerkzeuge sind beispielsweise aus der EP 2 596 878 A, aus der US 5,615,471 und aus der JP 09-108942 A bekannt. Ein weiteres Werkzeug ist bekannt aus der US 2011/0116881 A1. Die JP 2002/103140 A offenbart ein weiteres Mehrfachwerkzeug. Aus der DE 20 2014 001 657 U1 ist ein Werkzeughalter bekannt.

Es ist eine Aufgabe der vorliegenden Erfindung, die Einsatzmöglichkeiten einer Stanzvorrichtung, insbesondere mit motorisch angetriebener und beispielsweise drehbarer Station, zu erweitern.

Diese Aufgabe ist erfindungsgemäß gelöst durch ein Mehrfachwerkzeug mit den im Anspruch 1 angegebenen Merkmalen.

Erfindungsgemäß wurde erkannt, dass ein Mehrfachwerkzeug, das an eine Stanzvorrichtung angepasst ist, als Mehrfach-Gewindeschneider-Werkzeug ausgeführt sein kann. Bei den mehreren Gewindeschneidern kann es sich um Gewindeschneider für unterschiedliche Gewindedurchmesser und/oder um Gewindeschneider handeln, die sequentiell zur präzisen Formung ein und desselben Gewindes verwendet werden. Als Gewindeschneider werden in dieser Anmeldung auch gewindeformende Werkzeuge bezeichnet. Mit einer Stanzvorrichtung, die zum Einsatz von Mehrfachwerkzeugen, nämlich normalerweise von Mehrfachstanzwerkzeugen, schon vorbereitet ist, lässt sich nun durch Einbau des erfindungsgemäßen Mehrfachwerkzeuges die Funktionalität auf das Gewindeschneiden bzw. Gewindeformen erweitern. Über die Gewindeschneider-Antriebseinrichtung ist eine betriebssichere Funktion des jeweils aktiven Gewindeschneiders gegeben.

Eine Kulissenführung ermöglicht eine betriebssichere Auswahl des aktiven Gewindeschneiders. Je nach Ausgestaltung der Auswahleinrichtung kann die Kulissenführung als über den Auswahlantrieb verlagerbare Komponente oder auch als während der Auswahl feststehende Komponente gestaltet sein.

Die einzelnen Gewindeschneider des Mehrfachwerkzeugs können als jeweils mehrteilige Gewindeschneider-Einheiten ausgeführt sein. Das Mehrfachwerkzeug kann sechs derartige Gewindeschneider aufweisen. Auch eine andere Anzahl, z.B. 2, 3, 4, 5, 7, 8, 10 oder noch mehr Gewindeschneider können innerhalb eines Mehrfachwerkzeuges vorhanden und auswählbar sein.

Das Mehrfachwerkzeug kann einen schnell entfernbaren Werkzeugkopf aufweisen. Hierzu kann der Werkzeugkopf über eine zentral angebrachte Befestigungsschraube mit dem sonstigen Mehrfachwerkzeug verbunden sein. Das Mehrfachwerkzeug kann eine Schmiereinrichtung aufweisen. Insbesondere bewegte Teile des Mehrfachwerkzeuges, beispielsweise der jeweils aktive Gewindeschneider, können hierdurch geschmiert werden.

Eine Auswahleinrichtung nach Anspruch 2 ist an die Verhältnisse aktueller Stanzvorrichtungen, die zum Einsatz mit Mehrfachwerkzeugen gestaltet sind, gut angepasst. Eine automatisierte Auswahl ist möglich. Bei der Auswahl kann das Gewindeschneider-Magazin relativ zu Komponenten der Auswahleinrichtung um eine Gehäuse-Längsachse verschwenkt werden. Dabei kann das Gewindeschneider-Magazin und/oder eine Komponente der Auswahleinrichtung aktiv verschwenkt werden. Soweit das Gewindeschneider-Magazin bei der Auswahl nicht verdreht wird, bleibt jeder der Gewindeschneider in Bezug auf seine Position in Umfangsrichtung um die Gehäuse-Längsachse ortsfest. Soweit bei der Auswahl das Gewindeschneider-Magazin verdreht wird, kann erreicht werden, dass der aktive Gewindeschneider jeweils in der gleichen Umfangsposition um die Gehäuse-Längsachse bereitgestellt wird. Je nach den Antriebs- und Positionsanforderungen für das Mehrfachwerkzeug kann eine dieser Varianten von Vorteil sein.

Ein Auswahlantrieb nach Anspruch 3 erlaubt eine automatisierte Auswahl des jeweiligen Gewindeschneiders.

Ein gemeinsamer Antrieb nach Anspruch 4 für das Gewindeschneiden einerseits und die Auswahl andererseits vereinfacht den Aufbau des Mehrfachwerkzeugs bzw. der Antriebsverbindung mit der Stanzvorrichtung.

Eine Antriebseinrichtung nach Anspruch 5 erlaubt über ein wählbares Übersetzungsverhältnis zwischen den Verzahnungen, z.B. zwischen Innenund Außenverzahnung, eine Vorgabe der Anzahl der Rotationen beim Betrieb des aktiven Gewindeschneiders. Ein Übersetzungsverhältnis kann alternativ über ein zusätzlich vorsehbares Übersetzungsgetriebe vorgegeben werden. Alternativ kann die Antriebseinrichtung auch einen rotierenden Antriebskern bzw. eine zentrale Antriebswelle mit einer Außenverzahnung aufweisen, wobei der Antriebskern mit dem Gewindeschneidantrieb in Wirkverbindung steht und die Außenverzahnung des Antriebskerns mit der Außenverzahnung des Gewindeschneiders zusammenwirkt. Auch hierüber ist ein Übersetzungsverhältnis wie vorstehend erläutert vorgebbar.

Eine Ausgestaltung der Antriebseinrichtung nach Anspruch 6 vermeidet ein aufwändiges Aus- und wieder Einkuppeln des Antriebs für den jeweils aktiven Gewindeschneider. Zudem sorgt die Verzahnung dieser Ausgestaltung für eine Führung einer z.B. axialen Bewegung des Gewindeschneiders zwischen der aktiven und der deaktiven Stellung.

Der aktive Gewindeschneider des Mehrfachwerkzeugs kann in Bezug auf eine Gehäuse-Längsachse exzentrisch angeordnet sein. Eine derartige exzentrische Anordnung des aktiven Gewindeschneiders führt zu einer einfachen Verlagerungsbewegung bei der Auswahl des jeweils aktiven Gewindeschneiders.

Formschlusskörper nach Anspruch 7 ermöglichen eine sichere Kraftübertragung der Verbindung zwischen dem Betätigungsstößel und dem Werkzeugkopf. Über eine Anordnung und/oder Konturgestaltung der Formschlusskörper lässt sich eine formschlüssige Verbindung des Betätigungsstößels mit dem Werkzeugkopf in mehreren vorgegebenen Drehstellungen des Betätigungsstößels relativ zum Werkzeugkopf gewährleisten.

Eine Ausgestaltung nach Anspruch 8 ermöglicht eine Anordnung, bei der mindestens ein Federbolzen durch den Betätigungsstößel in der Betätigungsstellung entgegen seiner Federvorspannung verlagert wird. Dies kann zur Überwachung der Funktion des Mehrfachwerkzeugs genutzt werden.

Auch eine Anpassung der Federbolzen-Konfiguration an unterschiedliche Randkontur-Gestaltungen des Betätigungsstößels ist hierüber möglich. Drucksensor-Anlageflächen nach Anspruch 9 können mit zugeordneten Drucksensoren am Betätigungsstößel zusammenwirken. Derartige Drucksensoren können zu einer Lageüberwachung des Betätigungsstößels in der Betätigungsstellung genutzt werden. Alternativ oder zusätzlich ist es möglich, derartige Drucksensoren zur Überwachung einer Schneidkraft beim Gewindeschneiden bzw. Gewindeformen durch das Mehrfachwerkzeug heranzuziehen.

Ein Mehrfachwerkzeug nach Anspruch 10 ermöglicht einen Austausch des besonderem Verschleiß unterliegenden Gewindeschneiders, wobei die Einsatzhülse wiederverwendet werden kann. Zudem ermöglicht der Aufbau der Gewindeschneider-Einheit mit vom eigentlichen Gewindeschneider separater Einsatzhülse eine axiale Relativbewegung des Gewindeschneiders zur Einsatzhülse, was zur Erhöhung einer Lebensdauer des Gewindeschneiders genutzt werden kann. Die Einsatzhülse kann mehrteilig ausgeführt sein. Zur Einsatzhülse kann ein Hülsenkopf gehören, der in einer Einsatzaufnahme eines Gewindeschneider-Magazins aufgenommen ist. Der Hülsenkopf kann in der Einsatzaufnahme axial geführt sein. Der Hülsenkopf kann in der Einsatzaufnahme verdrehgesichert gelagert sein. Die Einsatzhülse kann weiterhin eine Gewindeschneider-Leitspindelhülse aufweisen. Letztere kann mit dem Hülsenkopf der Einsatzhülse verschraubt sein. Eine Magnethalterung nach Anspruch 10 ist besonders einfach und ermöglicht einen leichten Wechsel des Gewindeschneiders. Eine Haltekraft des Magneten kann so gewählt werden, dass sich der Gewindeschneider von der Einsatzhülse bei Überschreiten einer vorgegebenen Grenzkraft löst. Dies kann eine Beschädigung des Gewindeschneiders vermeiden. Der Magnet kann als Dauermagnet ausgeführt sein. Grundsätzlich kann der Magnet auch als Elektromagnet ausgeführt sein. Die Magnethalterung des Gewindeschneiders in der Einsatzhülse kann auch unabhängig von den vorstehend im Zusammenhang mit dem Mehrfachwerkzeug beschriebenen Details zum Einsatz kommen, also insbesondere unabhängig von der Art der Auswahleinrichtung und von der Art des Gewindeschneider-Antriebs. Eine Vorspannfeder nach Anspruch 11 kann zur Verringerung eines Verschleißes des Gewindeschneiders genutzt werden. Jede Gewindeschneider-Einheit kann genau eine Vorspannfeder zur axial federnden Lagerung des Gewindeschneiders in der Einsatzhülse aufweisen. Die Vorspannfeder kann als Elastomerblock, insbesondere als PU-Elastomerblock ausgeführt sein.

Die Antriebseinrichtung erlaubt über ein wählbares Übersetzungsverhältnis zwischen den Verzahnungen, z.B. zwischen Innen- und Außenverzahnung, eine Vorgabe der Anzahl der Rotationen beim Betrieb des aktiven Gewindeschneiders. Ein Übersetzungsverhältnis kann alternativ über ein zusätzlich vorsehbares Übersetzungsgetriebe vorgegeben werden. Alternativ kann die Antriebseinrichtung auch einen rotierenden Antriebskern bzw. eine zentrale Antriebswelle mit einer Außenverzahnung aufweisen, wobei der Antriebskern mit dem Gewindeschneidantrieb in Wirkverbindung steht und die Außenverzahnung des Antriebskerns mit der Außenverzahnung des Gewindeschneiders zusammenwirkt. Auch hierüber ist ein Übersetzungsverhältnis wie vorstehend erläutert vorgebbar.

Die beanspruchte Ausgestaltung der Antriebseinrichtung vermeidet ein aufwändiges Aus- und wieder Einkuppeln des Antriebs für den jeweils aktiven Gewindeschneider. Zudem sorgt die Verzahnung dieser Ausgestaltung für eine Führung einer z.B. axialen Bewegung des Gewindeschneiders zwischen der aktiven und der deaktiven Stellung.

Eine Vorspannfeder kann zur Verringerung eines Verschleißes des Gewindeschneiders genutzt werden. Die Vorspannfeder kann als Elastomerblock, insbesondere als PU-Elastomerblock ausgeführt sein.

Ein Ausführungsbeispiel der Erfindung wird nachfolgend anhand der Zeichnung näher erläutert. In dieser zeigen:
- Fig. 1: eine Seitenansicht einer schematisch dargestellten Stanzvorrichtung mit einem erfindungsgemäßen Mehrfachwerkzeug;
- Fig. 2: perspektivisch das Mehrfachwerkzeug mit stanzvorrichtungsseitigen Komponenten einer Werkzeug-Auswahleinrichtung und einer Werkzeug-Antriebseinrichtung;
- Fig. 3 und 4: perspektivische Ansichten des Mehrfachwerkzeugs;
- Fig. 5 und 6: perspektivische Ansichten von kopfseitigen Komponenten des Mehrfachwerkzeugs;
- Fig. 7 und 8: perspektivische Ansichten von werkzeugseitigen Komponenten des Mehrfachwerkzeugs;
- Fig. 9: schematisch und teilweise gebrochen einen Längsschnitt durch das Mehrfachwerkzeug und einen Werkstück-Gegenhalter, wobei ein Gewindeschneider als Werkzeug des Mehrfachwerkzeugs in einer aktiven und ein weiterer Gewindeschneider in einer deaktiven Stellung gezeigt ist, wobei das Mehrfachwerkzeug in einer Auswahlposition der kopfseitigen Komponenten dargestellt ist, die eine Auswahl eines aktiven Gewindeschneiders unter allen Gewindeschneidern des Mehrfachwerkzeugs über die WerkzeugAuswahleinrichtung ermöglicht; und
- Fig. 10: in einer zu Fig. 2 ähnlichen Darstellung das Mehrfachwerkzeug und den Werkstück-Gegenhalter, wobei das Mehrfachwerkzeug in einer Antriebsposition gezeigt ist, in der ein Antrieb des aktiven Gewindeschneiders über die Werkzeug-Antriebseinrichtung möglich ist;
- Fig. 11: ebenfalls in einem Längsschnitt, allerdings im Vergleich zu den Fig. 9 und 10 mit anderer Schnittebene, eine Auswahl von Komponenten des Mehrfachwerkzeugs;
- Fig. 12: einen Längsschnitt durch eine Auswahlkulisse und eine Auswahlhülse der Auswahleinrichtung des Mehrfachwerkzeugs;
- Fig. 13: in einer schematischen Aufsicht eine weitere Ausführung eines Werkzeugkopfes des Mehrfachwerkzeugs, wobei zusätzlich eine Randkontur eines hiermit zusammenwirkenden Betätigungsstößels der Stanzvorrichtung dargestellt ist;
- Fig. 14: in einer zu Fig. 13 ähnlichen Darstellung eine weitere Ausführung eines Werkzeugkopfes des Mehrfachwerkzeugs, zusammenwirkend mit einer weiteren Randkontur-Ausführung eines Betätigungsstößels der Stanzvorrichtung;
- Fig. 15: in einer zu den Fig. 13 und 14 ähnlichen Darstellung eine weitere Ausführung eines Werkzeugkopfes des Mehrfachwerkzeuges, wobei gleichzeitig eine Randkontur des hiermit zusammenwirkenden Betätigungsstößels der Stanzvorrichtung dargestellt ist;
- Fig. 16: eine Seitenansicht aus Blickrichtung XVI in Fig. 15 mit eingerücktem, formschlüssig mit dem Werkzeugkopf verbundenem Betätigungsstößel, wobei der Werkzeugkopf und der Betätigungsstößel jeweils gebrochen dargestellt sind;
- Fig. 17: in einer zur Fig. 16 ähnlichen Darstellung den Betätigungsstößel in einer relativ zum Werkzeugkopf ausgerückten Position;
- Fig. 18: in einer zu Fig. 4 ähnlichen Darstellung eine weitere Ausführung eines Mehrfachwerkzeugs und eines WerkstückGegenhalters;
- Fig. 19: in einer zu Fig. 9 ähnlichen Darstellung einen Längsschnitt durch das Mehrfachwerkzeug und den Werkstück-Gegenhalter nach Fig. 18, wobei das Mehrfachwerkzeug in der Auswahlposition zur Auswahl des aktiven Gewindeschneiders dargestellt ist;
- Fig. 20: in einer zu Fig. 9 ähnlichen Darstellung einen Längsschnitt durch eine weitere Ausführung eines Mehrfachwerkzeugs, dargestellt in einer Auswahlposition zur angetriebenen Auswahl eines aktiven Gewindeschneiders;
- Fig. 21: das Mehrfachwerkzeug nach Fig. 20, dargestellt in einer Antriebsposition zum Antrieb des aktiven Gewindeschneiders über eine Werkzeug-Antriebsanrichtung;
- Fig. 22: eine Seitenansicht des Mehrfachwerkzeugs nach Fig. 20 und eines zugehörigen Werkstück-Gegenhalters;
- Fig. 23 u. 24: perspektivische Ansichten des Mehrfachwerkzeugs und des Werkstück-Gegenhalters nach Fig. 22;
- Fig. 25: einen Längsschnitt durch den Werkstück-Gegenhalter nach den Fig. 22 bis 24;
- Fig. 26: in einer zu Fig. 20 ähnlichen Darstellung eine weitere Ausführung eines Mehrfachwerkzeugs;
- Fig. 27: in einer zu Fig. 21 ähnlichen Darstellung das Mehrfachwerkzeug nach Fig. 26;
- Fig. 28 u. 29: in zu den Fig. 23 und 24 ähnlichen Darstellungen das Mehrfachwerkzeug nach Fig. 26 und einen zugeordneten Werkstück-Gegenhalter;
- Fig. 30 bis 32: jeweils Querschnitte von Werkstücken im Bereich eines für den Einsatz des Gewindeschneiders vorbereiteten Gewindelochs;
- Fig. 33: einen axialen Längsschnitt durch eine weitere Variante einer Gewindeschneider-Einheit, die an Stelle der Ausführungen von Gewindeschneider-Einheiten zum Einsatz kommen kann, die im Zusammenhang mit den MehrfachwerkzeugAusführungen nach den Figuren 9 und 20 sowie 26 dargestellt sind;
- Fig. 34: eine kopfseitige Ansicht der Gewindeschneider-Einheit nach Figur 33, gesehen aus Blickrichtung XXXIV in Figur 33; und
- Fig. 35: eine Explosionsdarstellung der Gewindeschneider-Einheit nach Figur 33.

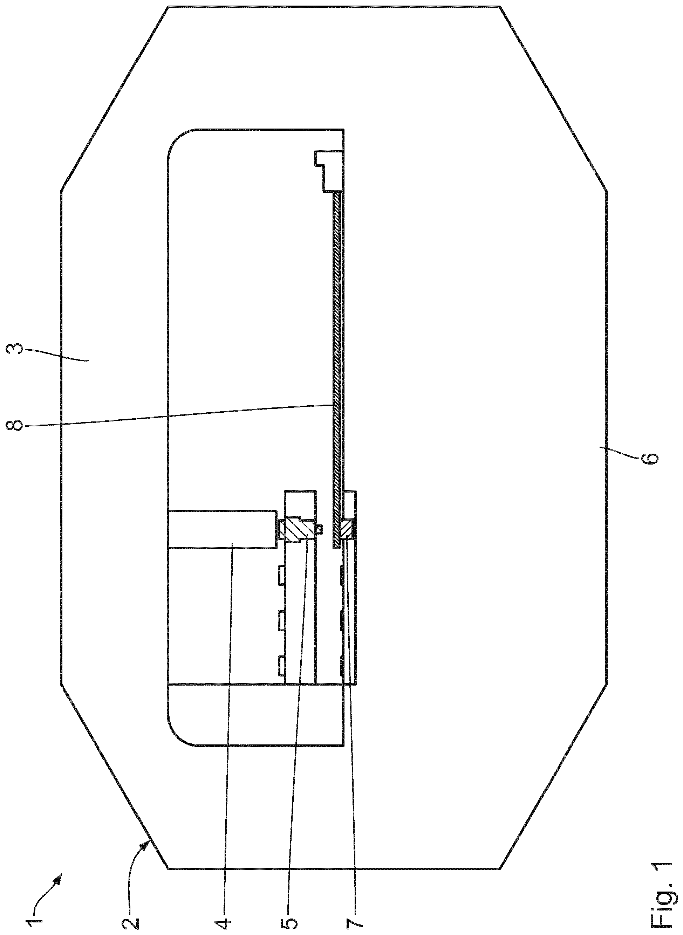

Eine in Fig. 1 in ihrer Gesamtheit gezeigte Stanzvorrichtung 1 umfasst ein Gestell bzw. einen Rahmen 2, an dessen oberen Gestellteil 3 ein Betätigungsstößel 4 angebracht ist. Unter dem Betätigungsstößel 4 ist ein Mehrfachwerkzeug 5 typischerweise in einem Revolver angeordnet. An dem unteren Gestellteil 6 des Gestells 2 befindet sich ein Werkstück-Gegenhalter 7 in Form einer Matrize. Zwischen dem Mehrfachwerkzeug 5 und ein Werkstück-Gegenhalter 7 liegt ein zu bearbeitendes Werkstück 8, das hier ein Metallblech ist. Im Betrieb wird ein Gewindeschneider des Mehrfachwerkzeugs 5, vermittelt durch den Betätigungsstößel 4 und über einen nachfolgend noch beschriebenen Antrieb, zum Schneiden eines Gewindes rotierend durch das Werkstück 8 bewegt. Beim Werkstück 8 kann es sich um eine Blechtafel handeln.

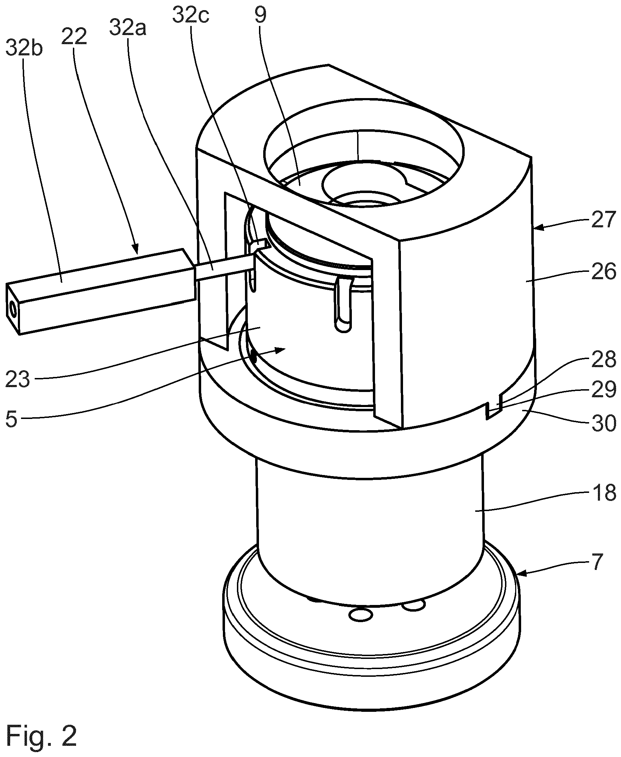

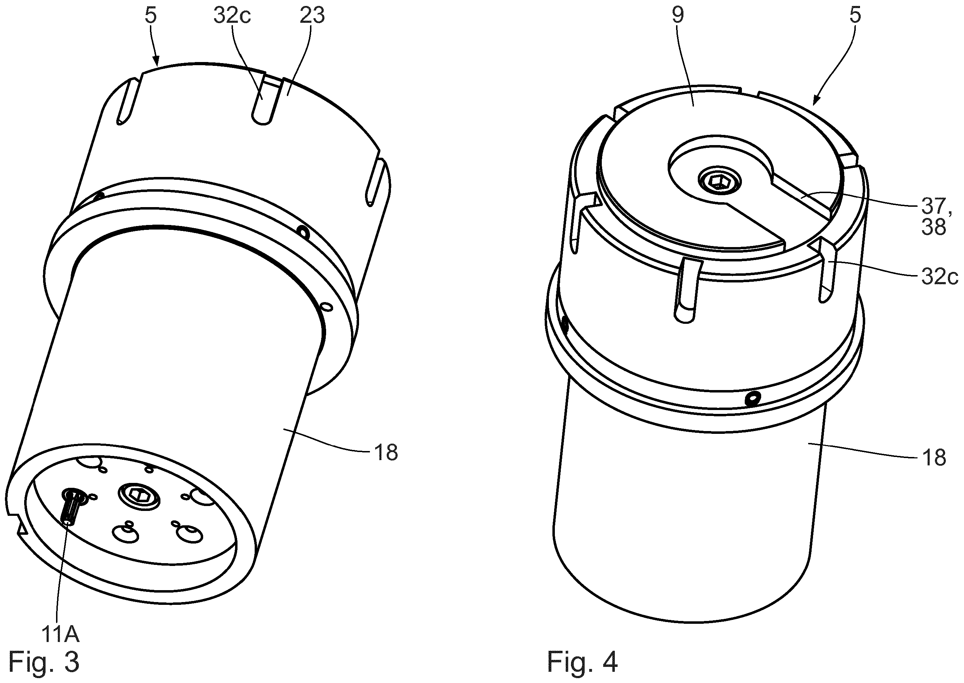

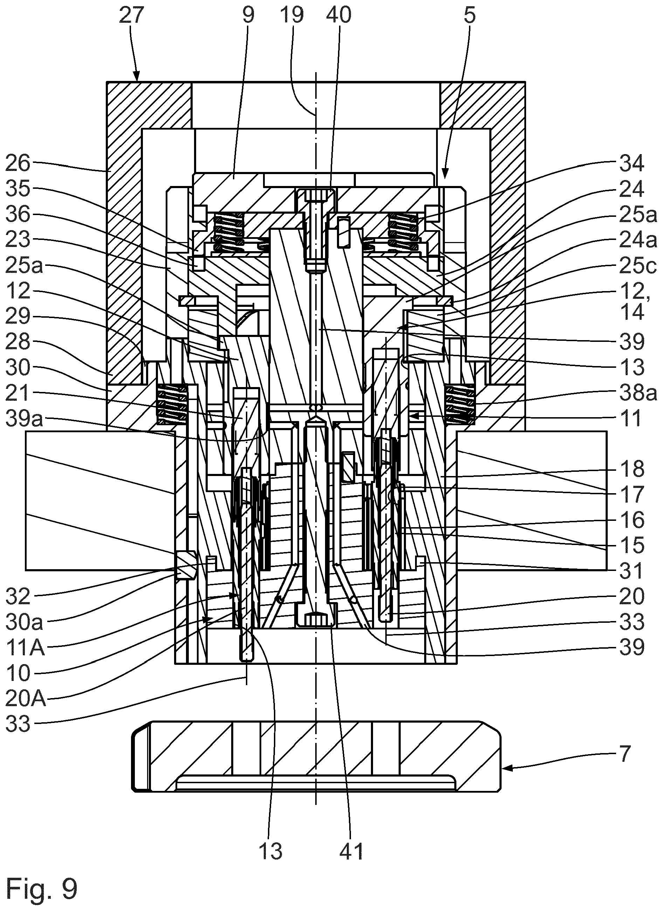

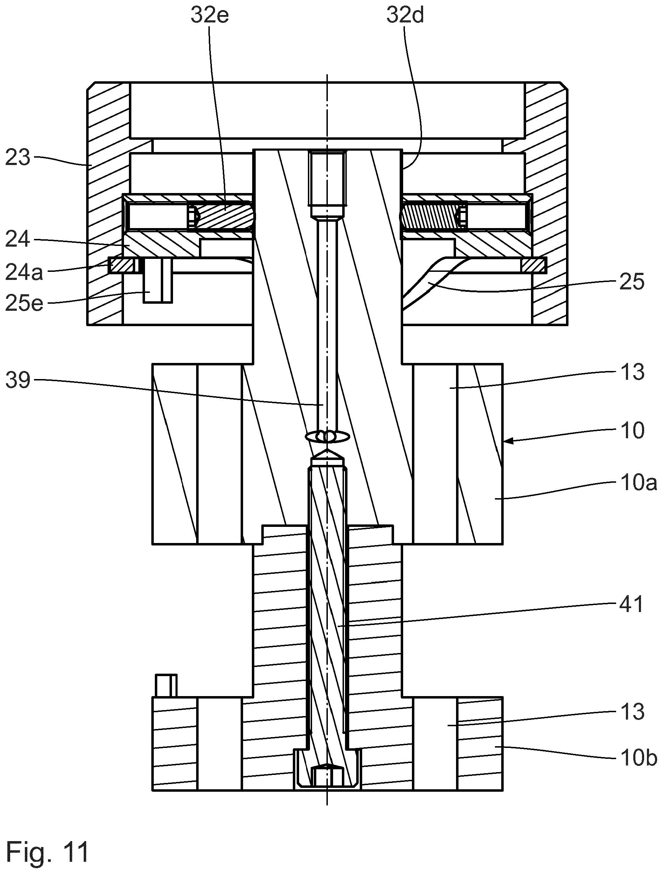

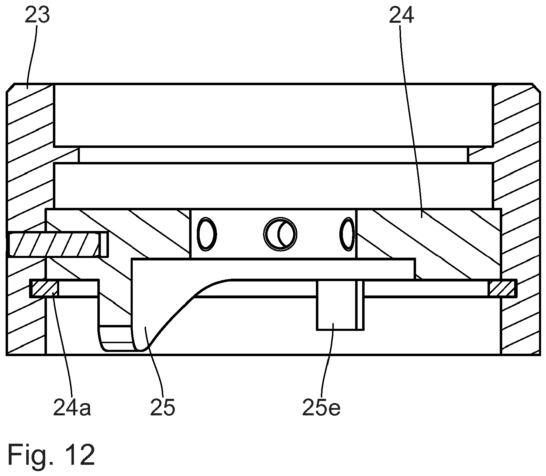

Die Fig. 2 bis 12 zeigen das Mehrfachwerkzeug 5 und einzelne Komponenten hiervon stärker im Detail. Das Mehrfachwerkzeug 5 hat einen Werkzeugkopf 9 und ein darunter angeordnetes Gewindeschneider-Magazin 10 (vgl. z. B. Fig. 9). Das Gewindeschneider-Magazin 10 ist mit dem Werkzeugkopf 9 verbunden. Das Gewindeschneider-Magazin 10 ist mehrteilig. Fig. 11 verdeutlicht eine Unterteilung des Magazins 10 in ein kopfseitiges Magazinteil 10a und ein werkstückseitiges Magazinteil 10b. Das Gewindeschneider-Magazin 10 trägt eine Mehrzahl, im vorliegenden Fall sechs Stück, von Gewindeschneider-Einheiten 11. Das komplette Mehrfachwerkzeug 5, wie beispielsweise in den Fig. 3 und 4 dargestellt, kann komplett aus der Stanzvorrichtung 1 entnommen werden. Hierdurch ist eine einfache Zugänglichkeit der Komponenten des Mehrfachwerkzeugs 5 beispielsweise zum Wechseln der Gewindeschneider-Einheiten 11 gewährleistet.

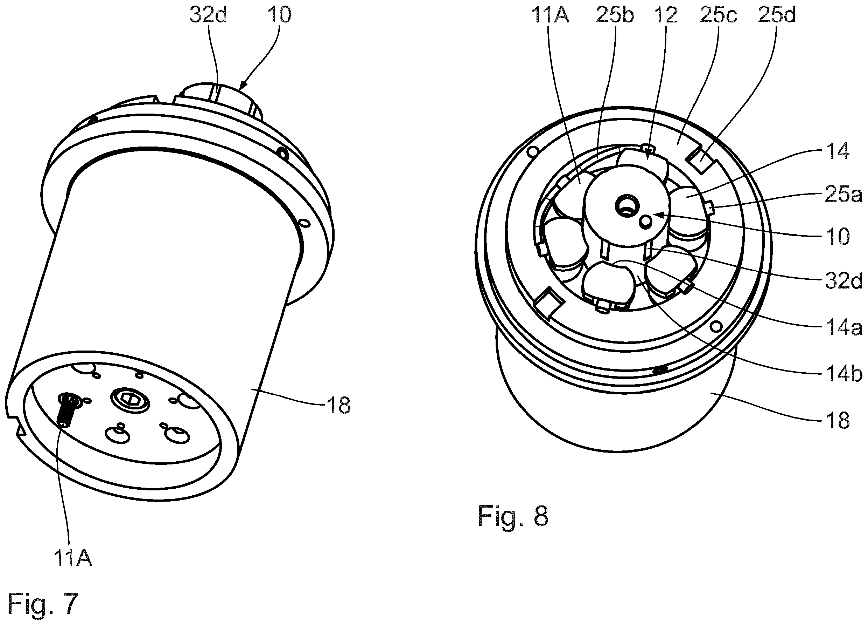

Jeder der Gewindeschneider-Einheiten 11 umfasst eine äußere Einsatzhülse 12, die in einer jeweiligen Einsatzaufnahme 13 des Gewindeschneider-Magazins 10 axial geführt und verdrehgesichert gelagert ist (vgl. z. B. Fig. 9). Die Verdrehsicherung ist gebildet durch mindestens eine axiale Führung zwischen einem Hülsenkopf 14 der Einsatzhülse 12 und der hierzu komplementär ausgeführten Einsatzaufnahme. Diese Verdrehsicherung ist gebildet durch eine komplementäre Formgestaltung zwischen einer radial innersten, konkav ausgeführten Wand 14a des Hülsenkopfes 14 (vgl. Fig. 8), die komplementär zur konvexen Zylindermantelfläche eines Kopfabschnitts 14b des kopfseitigen Magazinteils 10a gestaltet ist.

Die Gewindeschneider-Einheit 11 umfasst weiterhin eine Gewindeschneider-Leitspindelhülse 15. Letztere hat in einem Kopfbereich ein Außengewinde, welches mit einem hierzu komplementären Innengewinde der Einsatzhülse 12 kämmt. Weiterhin hat die Leitspindelhülse 15 eine Außenverzahnung 16 mit axial verlaufenden Zähnen. Diese kämmt mit einer Innenverzahnung 17 einer Antriebshülse 18 des Mehrfachwerkzeugs 5. Die Antriebshülse 18 rotiert um eine zentrale Gehäuse-Längsachse 19 des Mehrfachwerkzeugs 5. In Bezug auf diese Gehäuse-Längsachse 19 sind die Gewindeschneider-Einheiten 11 exzentrisch angeordnet.

Zu den Gewindeschneider-Einheiten 11 gehört weiterhin der eigentliche Gewindeschneider bzw. Gewindeformer 20, der von der Leitspindelhülse 15 aufgenommen ist. Über eine Vorspannfeder 21, die auch als Elastomerkörper ausgeführt sein kann, ist der jeweilige Gewindeschneider 20 in der zugehörigen Leitspindelhülse 15 zum Werkstück hin vorgespannt, wodurch eventuell auftretende Axialkräfte beim Anschneidevorgang ausgeglichen werden können.

Zur Auswahl eines aktiven Gewindeschneidereinsatzes 11A, der in der Fig. 9 jeweils links dargestellt ist, dient eine Auswahleinrichtung 22 des Mehrfachwerkzeugs 5. Letztere umfasst eine Auswahlhülse 23.

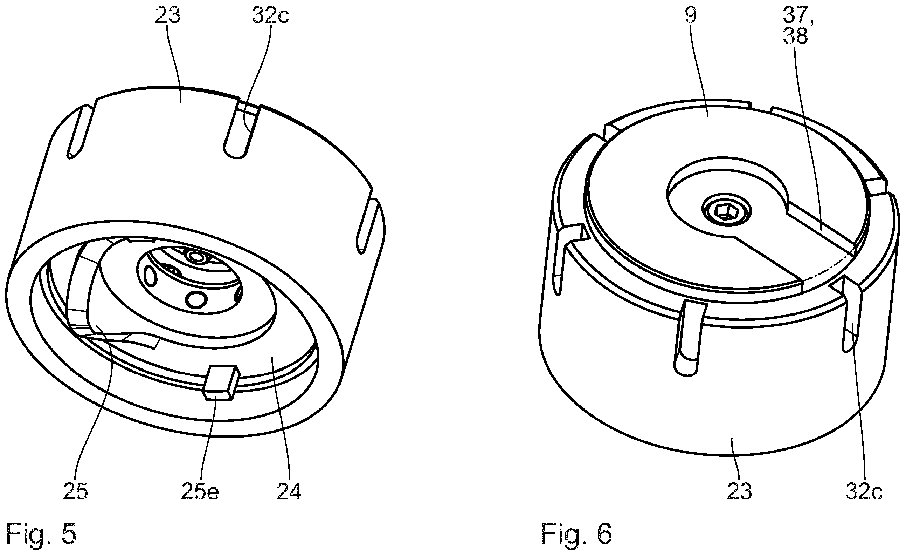

Drehfest in der Auswahlhülse 23 angeordnet ist eine Auswahlkulisse 24. Über etwa ein Drittel eines gesamten Umfangs der Auswahlkulisse 24 um die Gehäuse-Längsachse 19 hat die Auswahlkulisse 24 einen sich in etwa sinusförmig nach unten erstreckenden Auswahlbogen 25 (vgl. insbesondere Fig. 5). Die Auswahlkulisse 24 wirkt mit Auswahlstiften 25a an den Hülsenköpfen 14 der Einsatzhülsen 12 der sechs Gewindeschneider-Einheiten 11 zusammen (vgl. Fig. 8 und 9). Axial ist die Auswahlkulisse 24 an der Auswahlhülse 23 über einen Sprengring 24a und radial über einen Stift gesichert (vgl. z. B. Fig. 11). Der Hülsenkopf 14 der Einsatzhülse 12 der aktiven Gewindeschneider-Einheit 11A liegt am tiefsten Punkt des Auswahlbogens 25 der Auswahlkulisse 24 an. Komplementär zum Auswahlbogen 25 der Auswahlkulisse 24 ist ein Auswahlbogen 25b eines Auswahlrings 25c der Auswahleinrichtung 22 ausgeformt. Der Auswahlbogen 25b stellt eine Gegenkulisse zur Auswahlkulisse 24 der Auswahlhülse 23 dar. Der Auswahlring 25c ist axial und in Umfangsrichtung an der Auswahlkulisse 24 befestigt. Hierzu hat der Auswahlring 25c Fixiernuten 25d (vgl. Fig. 8), in die Fixiernasen 25e (vgl. Fig. 5) der Auswahlkulisse 24 greifen.

Bei der Auswahl der aktiven Gewindeschneider-Einheit 11A kommt ein Auswahl-Antriebskörper 26 in Form einer Antriebsglocke eines Auswahlantriebs 27 der Stanzvorrichtung 1 zum Einsatz, bei dem es sich gleichzeitig um eine Gewindeschneider-Antriebseinrichtung handelt. Die Antriebsglocke 26 wird von einem Antrieb der Stanzvorrichtung 1 angetrieben, der die Antriebsglocke 26 um die Gehäuse-Längsachse 19 verschwenkt. Ein Antriebskopf 28 des Auswahl-Antriebskörpers 26 rückt dabei in eine Antriebsnut 29 ein, die in einer schwenkbaren, äußeren Revolverhülse 30 einer Station der Stanzvorrichtung 1 ausgeführt ist. Die Revolverhülse 30 (vgl. Fig. 2 und 9) ist über eine Nut/Federverbindung 30a drehfest mit der Antriebshülse 18 verbunden (vgl. 9). In einer Auswahlantriebs-Konfiguration bzw. Auswahlposition nach Fig. 9 sind Zähne 31 des Magazins 10 axial eingerückt in hierzu komplementäre Kupplungsaufnahmen 32 der Antriebshülse 18.

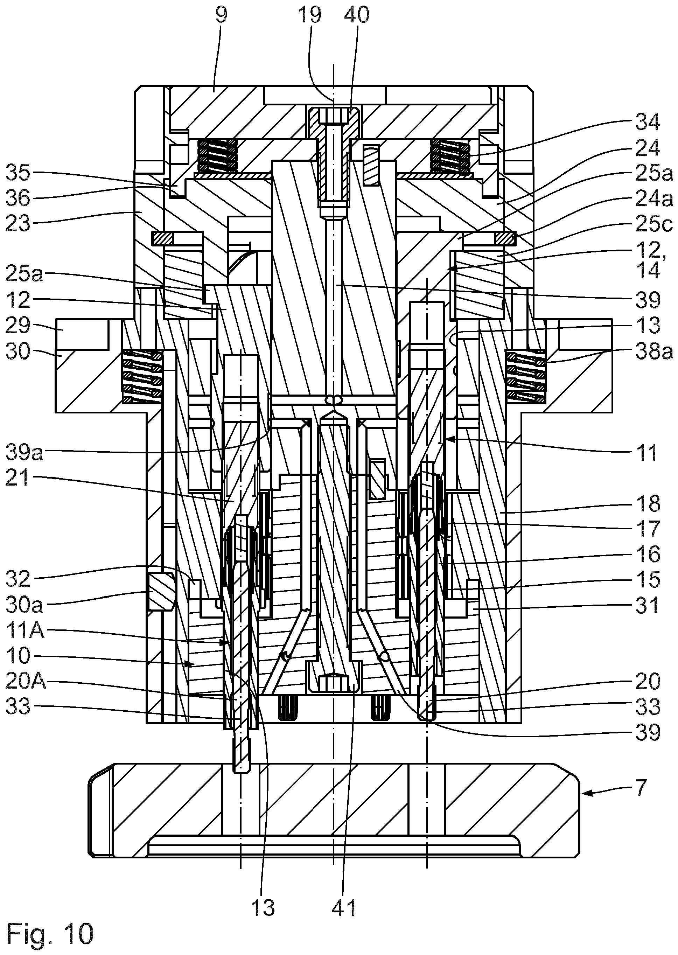

Bei der Auswahl rückt ein Fixierbolzen 32a der Auswahleinrichtung 22, der von einem Hubzylinder 32b betätigt wird, der Teil wiederum der Stanzvorrichtung 1 ist, in eine von sechs Fixiernuten 32c ein, die in Umfangsrichtung gleich verteilt in einer äußeren Mantelwand der Auswahlhülse 23 ausgeformt sind. Hierdurch wird die Auswahlhülse 23 gegenüber einer Verdrehung um die Längsachse 19 fixiert. Nun verschwenkt der Auswahlantrieb 27 über Vermittlung des Auswahl-Antriebskörpers 26, der äußeren Gehäusehülse 30 und der Antriebshülse 18 das Gewindeschneider-Magazin 10 um die Gehäuse-Längsachse 19, bis die auszuwählende Gewindeschneider-Einheit 11 an die Position der aktiven Gewindeschneider-Einheit 11A gelangt. In dieser Position ist die aktive Gewindeschneider-Einheit 11A gegenüber den anderen Gewindeschneider-Einheiten 11 über die führende Anlage des Hülsenkopfes 14 der Einsatzhülse 12 dieser aktiven Geschwinderschneider-Einheit 11A am Auswahlbogen 25 der Auswahlkulisse 24 axial in den Fig. 9 und 10 nach unten verlagert.

Bei dieser kulissengeführten Verlagerung der Gewindeschneider-Einheiten 11 zwischen der deaktiven und der aktiven Stellung bleiben die Innenverzahnungen 16 mit der Außenverzahnung 17 in Wirkverbindung.

Die Auswahl erfolgt also durch Verdrehen eines äußeren Gehäuseelements, nämlich der Revolverhülse 30, relativ zu einem weiteren Gehäuseelement, nämlich zur Auswahlhülse 23.

Bei dieser Auswahlverdrehung bleibt die Auswahlhülse 23 stationär, dreht sich also nicht um die Gehäuse-Längsachse 19 mit.

Die Umfangserstreckung des Auswahlbogens 25 ist abgestimmt auf die Anzahl der Gewindeschneider-Einheiten 11 im Mehrfachwerkzeug 5. Soweit beispielsweise acht Gewindeschneider-Einheiten 11 in einer weiteren Variante des Mehrfachwerkzeugs 5 vorliegen, erstreckt sich der Auswahlbogen 25 über maximal ein Viertel des gesamten Umfangs der Auswahlkulisse 24.

Nach erfolgter Auswahl wird der Fixierbolzen 32a wieder in den Hubzylinder 32b eingezogen und drückt dabei aus der Fixiernut 32c aus.

Sofern eine Auswahl der gewünschten Gewindeschneider-Einheit 11A innerhalb eines zulässigen Schwenkbereichs der Antriebsglocke 26 nicht möglich sein sollte, wird der Fixierbolzen 32a vorübergehend in den Hubzylinder 32b eingezogen und mithilfe der Antriebsglocke 26 das gesamte Mehrfachwerkzeug 5 um die Gehäuse-Längsachse 19 soweit verdreht, bis die nächste Fixiernut 32c dem Fixierbolzen 32a in Umfangsrichtung gegenübersteht. Dann kann der Fixierbolzen 32a in diese nächste Fixiernut 32c einrücken und eine weitere Relativverdrehung der Auswahlhülse 23 zum Magazin 10 ist möglich. Dieser Vorgang wird gegebenenfalls mehrfach wiederholt, bis die gewünschte Gewindeschneider-Einheit 11A ausgewählt ist.

Soweit das gesamte Mehrfachwerkzeug 5 bei der Auswahl bei eingezogenem Fixierbolzen 32a verdreht wird, ist über Kugeldruckschrauben eine Fixierung einer Drehposition der Auswahlhülse 23 zum Werkzeugkopf 9 gewährleistet. Nuten 32d für diese Kugeldruckschrauben sind im Kopfabschnitt 14b des Magazins 10 ausgeführt. Die Kugeldruckschrauben sind in der Fig. 11 bei 32e dargestellt.

Zum Gewindeschneiden wird das in der Regel vorgebohrte Werkstück 8 relativ zur aktiven Gewindeschneider-Einheit 11A unter dem Mehrfachwerkzeug 5 vorpositioniert. Anschließend wird insbesondere der Gewindeschneider 20 der aktiven Gewindeschneider-Einheit 11A zum Gewindeschneiden bzw. -formen im Werkstück 8 angetrieben, d.h. einerseits um seine jeweilige Gewindeschneider-Längsachse 33 gedreht und andererseits axial durch das Werkstück 8 angetrieben.

Der Gewindeschneider-Antrieb erfolgt durch eine Gewindeschneider-Antriebseinrichtung, zu der der vorstehend erläuterte Antrieb 27 gehört, unter Vermittlung des Betätigungsstößels 4 der Stanzvorrichtung 1. Sobald der Betätigungsstößel 4 den Werkzeugkopf 9 nach unten gegen die Vorspannkraft von Federn 34 die in Umfangsrichtung um die Gehäuse-Längsachse 19 gleich verteilt axial zwischen dem Werkzeugkopf 9 und der Auswahlkulisse 24 angeordnet sind, relativ zur Auswahlhülse 23 und zur Auswahlkulisse 24 verlagert, gelangen Kupplungszähne 35 an der Unterseite des Werkzeugkopfes 9 axial in Eingriff mit hierzu komplementär ausgeführten Kupplungsaufnahmen 36 in der Auswahlhülse 23. Gleichzeitig gelangen die Kupplungszähne 31 des Magazins 10 außer Eingriff mit den Kupplungsaufnahmen 32 der Antriebshülse 18 (vgl. Fig. 10). Die Vorspannfedern 34 sorgen, solange der Werkzeugkopf 9 nicht mit dem Betätigungsstößel 4 beaufschlagt ist, für das axiale Einrücken der Zähne 31 des Magazins 10 in die Kupplungsaufnahmen 32 der Antriebshülse 18, wie vorstehend bereits erläutert.

Zum Gewindeschneider-Antrieb kommt der Antriebskopf 28 der Antriebsglocke 26 wieder in Eingriff mit der Antriebsnut 29. Bei einem Verschwenken der äußeren Gehäusehülse 30 durch den Gewindeschneider-Antrieb wird hierdurch auch die Antriebshülse 18, nicht aber das drehfest mit dem während des Gewindeschneidens nicht drehenden Werkzeugkopf 9 verbundene, stationäre Gewindeschneider-Magazin 10 verdreht. Der Gewindeschneider-Antriebskonfiguration des Antriebs 27, bei der die Zahn/Nut-Kupplungen 35, 36 in Eingriff und die Zahn/Nut-Kupplungen 31, 32 außer Eingriff sind, verschwenkt also die Antriebshülse 18 relativ zum Gewindeschneider-Magazin 10, so dass die Innenverzahnung 17 der Antriebshülse 18 eine Rotation aller Leitspindelhülsen 15 der Gewindeschneider-Einheiten 11 bewirkt. Bei der Rotation drehen sich die Leitspindelhülsen 15 relativ zu den Einsatzhülsen 12, so dass die Gewindeschneider 20 relativ zu den Einsatzhülsen 12 abhängig vom Drehsinn der Schwenkbewegung des Gewindeschneiderantriebs 27 in das Werkstück 8 hinein oder aus diesem heraus gedreht werden. Dies betrifft natürlich nur die aktive Gewindeschneider-Einheit 11A, dessen Gewindeschneider 20 als einziger Kontakt zum Werkstück erhält. Die anderen Gewindeschneider-Einheiten 11 sind soweit axial in das Gehäuse des Mehrfachwerkzeugs 5 eingezogen, so dass sie zu keinem Zeitpunkt mit dem Werkstück 8 in Kontakt kommen.

Beim Verschwenken des Gewindeschneider-Antriebs 27 werden beispielsweise vier vollständige Umdrehungen insbesondere des Gewindeschneiders 20 der aktiven Gewindeschneider-Einheit 11A bewerkstelligt. Je nach dem Schwenkwinkel des Auswahl-Antriebskörpers 26 um die Gehäuse-Längsachse 19 kann die Anzahl der hierdurch herbeigeführten Gewindeschneider-Rotationen durch das Übersetzungsverhältnis der Innenverzahnung 17 relativ zu den Außenverzahnungen 16 beeinflusst werden. Eine axiale Verlagerung des Gewindeschneiders 20 beträgt beim Gewindeschneiden beispielsweise 16 mm. Der aktive Gewindeschneider wird auch mit 20A bezeichnet. Ein Übersetzungsverhältnis kann beispielsweise 1:5 betragen. Insgesamt können 2,5 Umdrehungen zum Gewindeschneiderantrieb erfolgen. Die axiale Verlagerung des Gewindeschneiders 20 beim Gewindeschneiden hängt vom zu formenden Gewinde ab und kann bei einem Gewinde M5 mit einer Gewindesteigung von 0,8 mm bei 2,5-facher Umdrehung beispielsweise 10 mm betragen. Bei einem Gewinde M8 mit Gewindesteigung 1,25 mm ergibt sich bei gleicher Umdrehungszahl eine axiale Verlagerung des zugehörigen Gewindeschneiders von 15,6 mm. Das Magazin 10 kann mit hinsichtlich ihrer Größe unterschiedlichen Gewindeschneidern 20 bestückt sein. Bei der Verwendung eines Mehrfachwerkzeugs 5 mit sechs Gewindeschneidern 20 kann beispielsweise ein metrischer Satz M2,5, M3, M4, M5, M6 und M8 zum Einsatz kommen. Eine Bestückung des Mehrfachwerkzeugs 5 mit Gewindeschneidern kann auch mit Gewindeschneidern 20 der Gewindestandards UNF, UNC, BSW, BSF oder UNEF erfolgen. Auch eine Misch-Bestückung verschiedener Gewindestandards ist möglich.

Dort, wo der Betätigungsstößel 4 mit dem Werkzeugkopf 9 in Kontakt kommt, kann der Werkzeugkopf 9 eine Aufnahmenut 37 aufweisen. Diese Aufnahmenut 37 hat, wie in Aufsicht in der Fig. 4 gezeigt, eine nicht rotationssymmetrische, bei der Ausführung nach den Fig. 2 bis 12 schlüssellochförmige, Randkontur 38. Eine solche nicht rotationssymmetrische Randkontur 38 kann als Verdrehsicherung des Werkzeugkopfes 9 relativ zum Betätigungsstößel 4 um die Gehäuse-Längsachse 19 dienen.

Beim Gewindeschneiden kann über ein gesteuertes Absenken des Betätigungsstößels 4 eine Schneidtiefe der aktiven Gewindeschneider-Einheit 11A im Werkstück vorgegeben werden. Für die axiale Verlagerung des Betätigungsstößels 4 gilt, was vorstehend im Zusammenhang mit den verschiedenen Gewindegrößen hinsichtlich der axialen Verlagerung des aktiven Gewindeschneiders 20A bereits erläutert wurde. Beim Absenken senkt der Betätigungsstößel 4 entgegen der Vorspannkraft von Aufnahmefedern 38a das Magazin 10 mit den Gewindeschneider-Einheiten 11 einschließlich der aktiven Gewindeschneider-Einheit 11A in Richtung auf den Werkstück-Gegenhalter 7 weiter ab. Die Aufnahmefedern 38a sind axial zwischen der Antriebshülse 18 und der Revolverhülse 30 gleich verteilt in Umfangsrichtung um die Gehäuse-Längsachse 19 angeordnet. Das Absenken findet bis knapp über das Werkstück statt, beispielsweise bis 1 mm über dem Werkstück.

Schmiermittelkanäle 39 durchziehen insbesondere die beiden Magazinteile 10a und 10b. Hierdurch wird Schmiermittel zu den beweglichen Teilen des Mehrfachwerkzeugs 5, insbesondere zu den Antriebskomponenten und den Gewindeschneider-Einheiten 11 befördert. Es kann ein aktives Schmieren stattfinden. Über eine Kanalausnehmung 39a jeweils in einer Außenwand der Eintrittshülse 12 können bei der jeweils aktiven Gewindeschneider-Einheit 11A Abschnitte der Schmiermittelkanäle 39 zum Schmieren insbesondere der beweglichen Teile der aktiven Gewindeschneider-Einheit 11A miteinander verbunden werden. In der deaktiven, also in den Fig. 9 und 10 nach oben verlagerten Stellung der Gewindeschneider-Einheiten 11 unterbricht die Außenwand der jeweiligen Einsatzhülse 12 diese Abschnitte der Schmiermittelkanäle 39.

Über zentrale Schrauben 40, 41 ist das Mehrfachwerkzeug 5 rasch in seine Untereinheiten demontierbar, beispielsweise in die kopfseitigen Komponenten nach den Fig. 5 und 6 einerseits und in die werkzeugseitigen Komponenten nach den Fig. 7 und 8 andererseits. Insbesondere ist der Werkzeugkopf 9 durch Lösen der Schraube 40 schnell entfernbar.

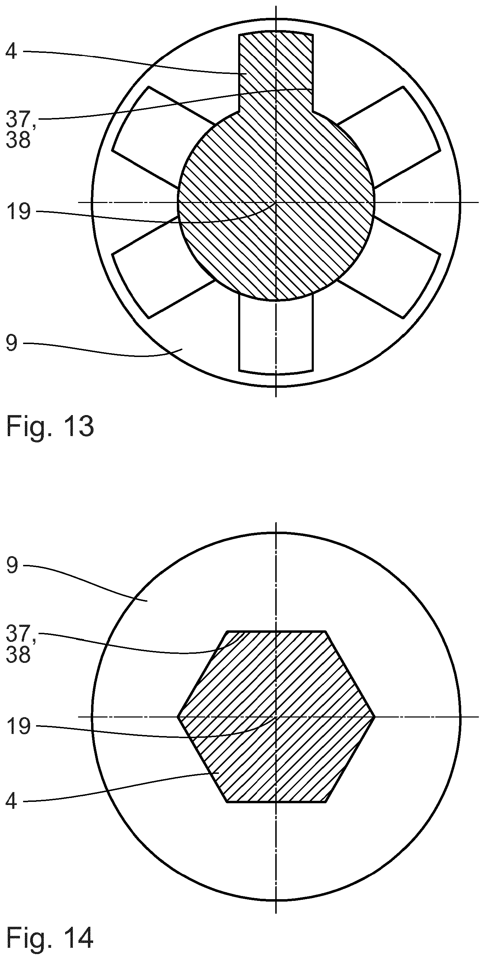

Zur Positionierung des aktiven Gewindeschneider-Einsatzes 11A relativ zu seinem Einsatzort auf dem Werkstück kann es sich empfehlen, das gesamte Mehrfachwerkzeug 5 einschließlich des Werkzeugkopfes 9 um die Gehäuse-Längsachse 19 zu verdrehen. Damit der Betätigungsstößel 4, dessen Randkontur komplementär zur nicht rotationssymmetrischen Randkontur 38 der Aufnahmenut 37 ist, in jeder der sechs möglichen Werkzeug-Positionen in Umfangsrichtung formschlüssig mit der Aufnahmenut 37 zusammenwirken kann, ist diese, wie in der Fig. 13 dargestellt, bei einer Variante des Mehrfachwerkzeugs 5 mehrzählig rotationssymmetrisch ausgeführt. Bei der Ausführung des Mehrfachwerkzeugs 5 mit sechs Gewindeschneider-Einheiten 11 ist die Randkontur 38 der Aufnahmenut 37 entsprechend sechszählig rotationssymmetrisch.

Eine weitere Variante eines nicht rotationssymmetrischen Betätigungsstößels 4 und einer entsprechend nicht rotationssymmetrischen, hierzu komplementären Aufnahmenut 37 mit Randkontur 38 zeigt Fig. 14. Die Randkontur hat die Form eines gleichseitigen Sechsecks. Auch hier ist die Randkontur 38 der Aufnahmenut 37 sechszählig rotationssymmetrisch, so dass in jeder der sechs möglichen Auswahlpositionen für die aktive Gewindeschneider-Einheit 11A eine kraftschlüssige Verbindung des Betätigungsstößels 4 mit der Aufnahmenut 37 möglich ist.

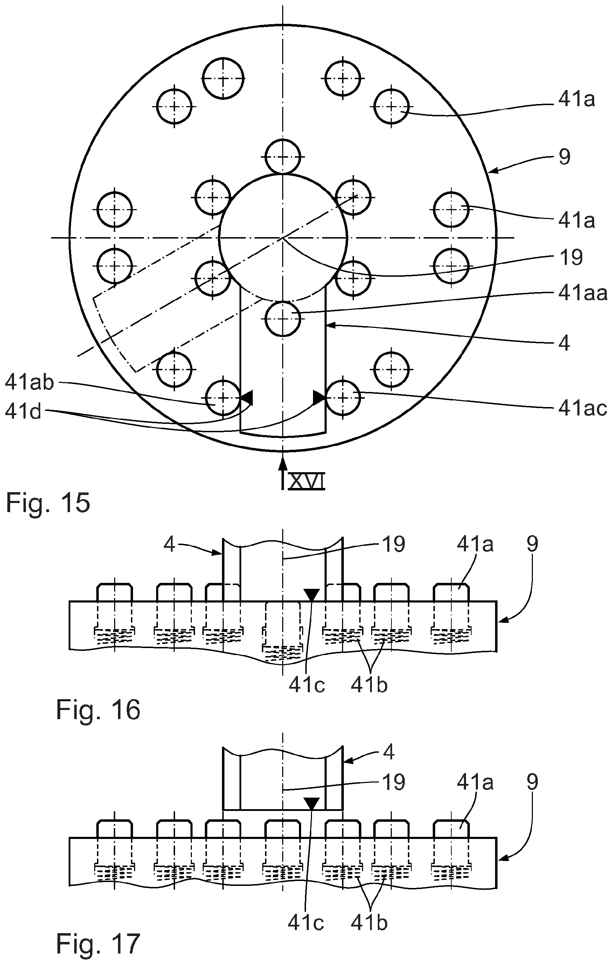

Eine weitere Variante einer Gestaltung einer Oberseite des Werkzeugkopfes 9 zum Zusammenwirken mit dem Betätigungsstößel 4 der Ausführung nach den Fig. 2 bis 12 zeigt die Fig. 15 bis 17. Komponenten und Funktionen, die denjenigen entsprechen, die vorstehend unter Bezugnahme auf die Fig. 1 bis 14 bereits erläutert wurden, tragen die gleichen Bezugsziffern und werden nicht nochmals im Einzelnen diskutiert.

Der Werkzeugkopf 9 nach den Fig. 15 bis 17 hat an seiner oberen, dem Betätigungsstößel 4 zugewandten Seite eine Mehrzahl von, in der dargestellten Ausführung insgesamt achtzehn, Formschlusskörpern 41a in Form von Bolzen, die relativ zum sonstigen Werkzeugkopf 9 axial, also in Richtung der Gehäuse-Längsachse 19, verlagerbar sind. Die Bolzen 41a sind mittels jeweils zugeordneter Vorspannfedern 41b zum Betätigungsstößel 4, also entgegen einer Betätigungsrichtung des Betätigungsstößels 4, hin vorgespannt.

Der Werkzeugkopf 9 nach den Fig. 15 bis 17 ist wieder für die Variante des Mehrfachwerkzeugs 5 mit 6 Gewindeschneider-Einheiten 11 ausgeführt. Entsprechend sind sechs relative Drehstellungen des Werkzeugkopfes um die Gehäuse-Längsachse 19 in Umfangsrichtung möglich, die jeweils einer ausgewählten Gewindeschneider-Einheit entsprechen. In jeder dieser sechs Drehstellungen wirken drei der 18 Federbolzen 41a, die in der Fig. 15 mit 41aa, 41ab und 41ac bezeichnet sind, mit dem Betätigungsstößel 4, soweit dieser in der Betätigungsstellung vorliegt (vgl. Fig. 16), zusammen. Ein innerer dieser drei Federbolzen, nämlich der Federbolzen 41aa wird dabei vom Betätigungsstößel 4 entgegen der Vorspannung der Vorspannfeder 41b in den Werkzeugkopf 9 hinein verlagert (vgl. Fig. 16 und 17). Sobald der Betätigungsstößel 4 seitlich dieses Federbolzens 41aa Kontakt mit einer Oberseite des Werkzeugkopfes 9 hat, spricht ein im Betätigungsstößel 4 untergebrachter Drucksensor 41c an (vgl. Fig. 17). Die Oberseite des Werkzeugkopfes 9 stellt also eine Drucksensor-Anlagefläche des Mehrfachwerkzeugs 5 dar.

In der Betätigungsstellung liegt der Betätigungsstößel 4 in Umfangsrichtung genau passend zwischen den beiden anderen dieser drei mit dem Betätigungsstößel 4 zusammenwirkenden Federbolzen, nämlich zwischen den radial äußeren Federbolzen 41ab, 41ac.

Im Bereich von Anlageflächen, über die Mantelwände dieser beiden äußeren Federbolzen 41ab, 41ac an Seitenwänden des Betätigungsstößels 4 anliegend, hat der Betätigungsstößel 4 zwei weitere Drucksensoren 41d (vgl. Fig. 15). Diese Mantelflächen der Federbolzen 41ab, 41ac stellen wiederum Drucksensor-Anlageflächen des Mehrfachwerkzeugs 5 dar.

Soweit der Betätigungsstößel 4 in der Betätigungsstellung nach Fig. 16 vorliegt, sprechen auch diese beiden Drucksensoren 41d an. Die drei Drucksensoren 41c, 41d stehen mit einer nicht dargestellten, zentralen Steuereinrichtung der Stanzvorrichtung 1 in Signalverbindung.

Soweit alle drei Drucksensoren 41c, 41d ansprechen, wird an die Steuereinrichtung das Signal "Betätigungsstößel korrekt positioniert" ausgegeben.

In jeder der sechs Relativ-Drehstellungen des Betätigungsstößels 4 zum Werkzeugkopf 9 sind drei andere der 18 Federbolzen 41a aktiv. Dies ist in der Fig. 15 noch für eine weitere Relativ-Drehstellung gestrichelt veranschaulicht.

Über die Drucksensoren 41d ist zudem beim Gewindeschneiden eine Rückmeldung über die durch das Mehrfachwerkzeug 5 vermittelte Schneidkraft an die Stanzvorrichtung 1 möglich. Beim Gewindeschneiden übt der Werkzeugkopf 9 eine in Umfangsrichtung gerichtete Kraft auf den Betätigungsstößel 4 aus, die ein Maß für diese Schneidkraft ist. Diese Kraft kann über die Drucksensoren 41d ermessen werden. Sofern diese Schneidkraft außerhalb eines vorgegebenen Toleranzbereichs liegt, kann über die Drucksensoren 41d eine entsprechende Fehlermeldung an die Steuereinrichtung gegeben werden. Beispielsweise kann dann eine Notabschaltung der Stanzvorrichtung 1 herbeigeführt werden. Auch ein Hinweis auf einen Wechsel der aktiven Gewindeschneider-Einheit 11A ist möglich.

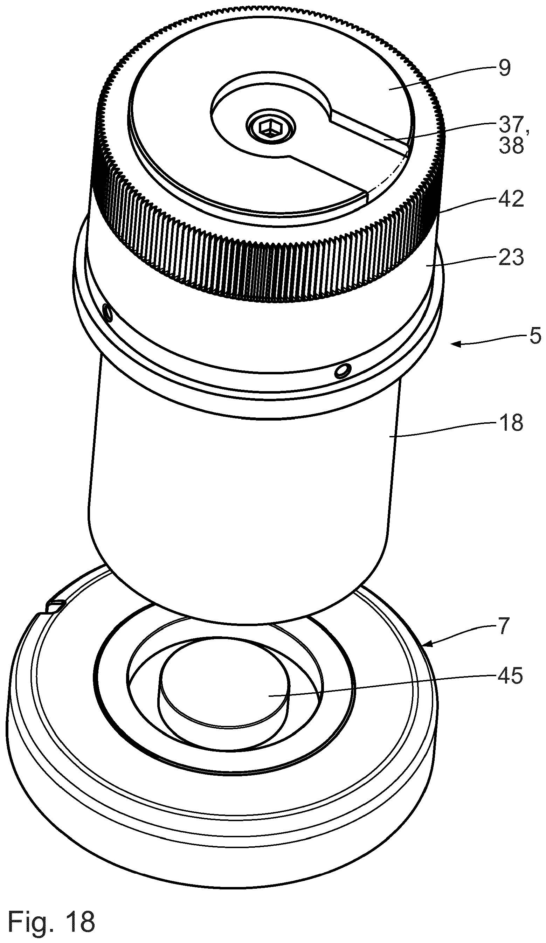

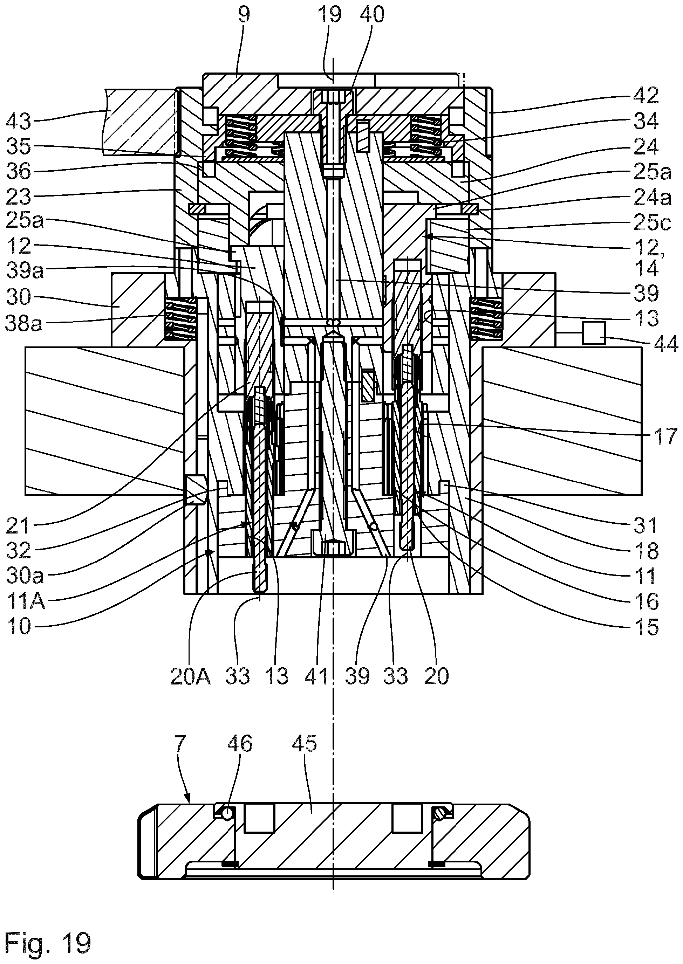

Anhand der Fig. 18 und 19 wird nachfolgend eine Variante des Mehrfachwerkzeugs 5 erläutert, welche sich hinsichtlich der Konfiguration eines Auswahlantriebs und einer Gewindeschneider-Antriebseinrichtung von der Ausführung nach den Fig. 1 bis 17 unterscheidet.

Teil eines Auswahlantriebs bei der Ausführung nach den Fig. 18 und 19 ist ein Zahnkranz 42, der in einer Außenwand der Auswahlhülse 23 geformt ist. Mit diesem Zahnkranz 42 kämmt ein Auswahlritzel 43 (vgl. Fig. 19) eines Auswahlantriebs der Stanzvorrichtung 1. Mit dem Auswahlantrieb kann die Auswahlhülse 23 gedreht werden. In der Auswahlposition nach Fig. 19 dreht dann die Auswahlkulisse 24 mitsamt der Gegenkulisse, gebildet durch den Auswahlring 25c, relativ zum dann nicht drehenden Magazin 10, so dass hierüber eine Auswahl der aktiven Gewindeschneider-Einheit 11A erfolgt, analog zu dem, was vorstehend im Zusammenhang mit der Ausführung nach den Fig. 2 bis 12 bereits erläutert wurde.

In der Gewindeschneidposition, die für die Ausführung nach den Fig. 18 und 19 nicht dargestellt ist, grundsätzlich aber der Position nach Fig. 10 der vorstehend erläuterten Ausführung entspricht, wird die Revolverhülse 30 über eine in der Fig. 19 schematisch dargestellte Gewindeschneider-Antriebseinrichtung 44 gedreht.

Soweit der Werkstück-Gegenhalter 7 beim Schneidvorgang des Mehrfachwerkzeugs 5 synchron mit verdreht wird, kann das Werkstück auf einem gelagerten Mittelstück 45 des Werkstück-Gegenhalters 7 aufliegen (vgl. Fig. 19 unten). Das Mittelstück 45 ist relativ zum sonstigen Werkstück-Gegenhalter 7 mithilfe eines Lagers 46 drehbar um die Gehäuse-Längsachse 19 gelagert. Das Lager 46 kann als Kugellager ausgeführt sein. Diese Variante des Werkstück-Gegenhalters 7 kann bei allen vorstehend beschriebenen Varianten des Mehrfachwerkzeugs 5 zum Einsatz kommen.

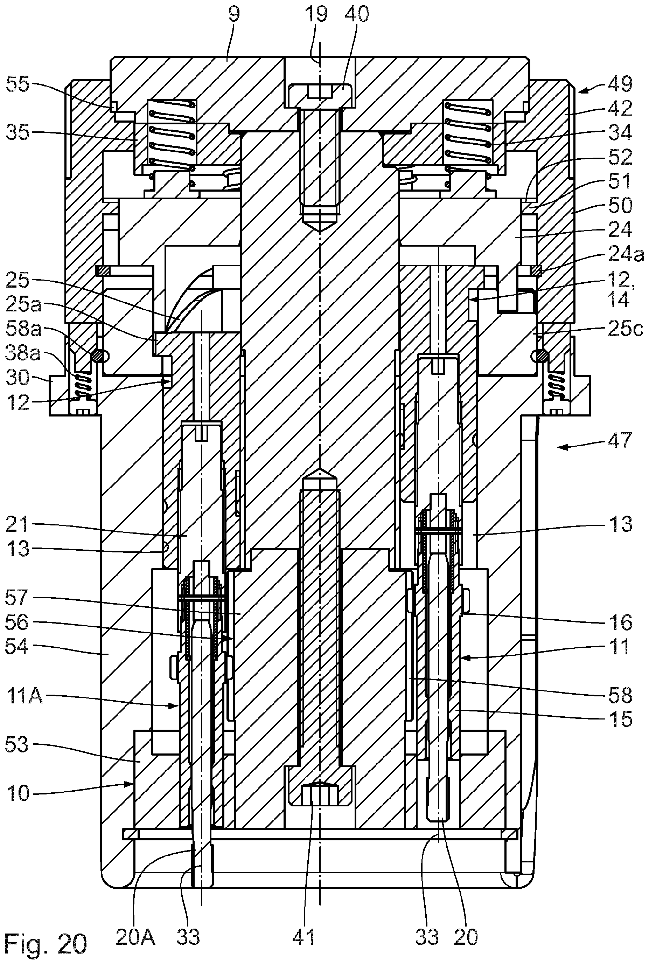

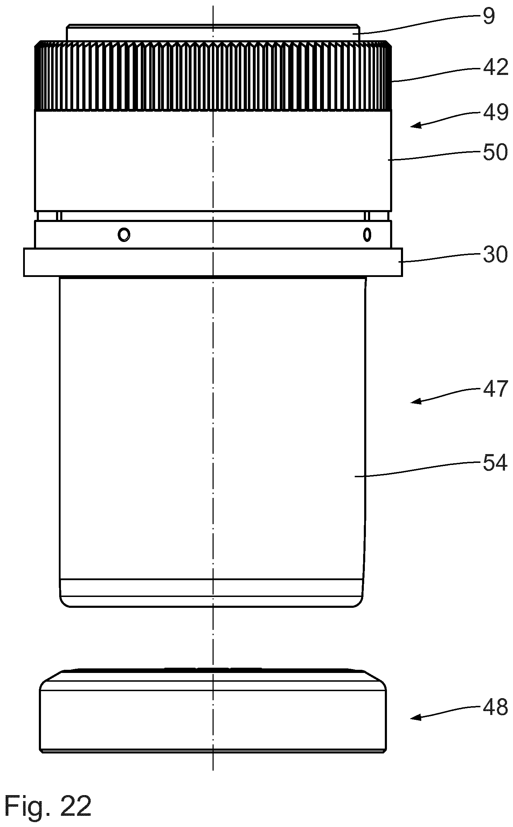

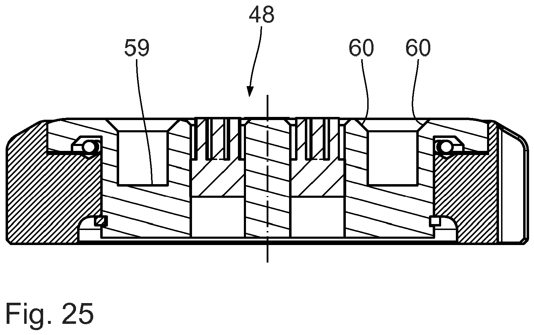

Anhand der Fig. 20 bis 25 wird nachfolgend eine weitere Ausführung eines Mehrfachwerkzeugs 47, aufweisend eine Mehrzahl von Gewindeschneidern, und eines zugehörigen Werkstück-Gegenhalters 48 beschrieben. Komponenten und Funktionen, die vorstehend anhand der Ausführungen nach den Fig. 1 bis 19 erläutert wurden, tragen die gleichen Bezugsziffern und werden nicht nochmals im Einzelnen diskutiert.

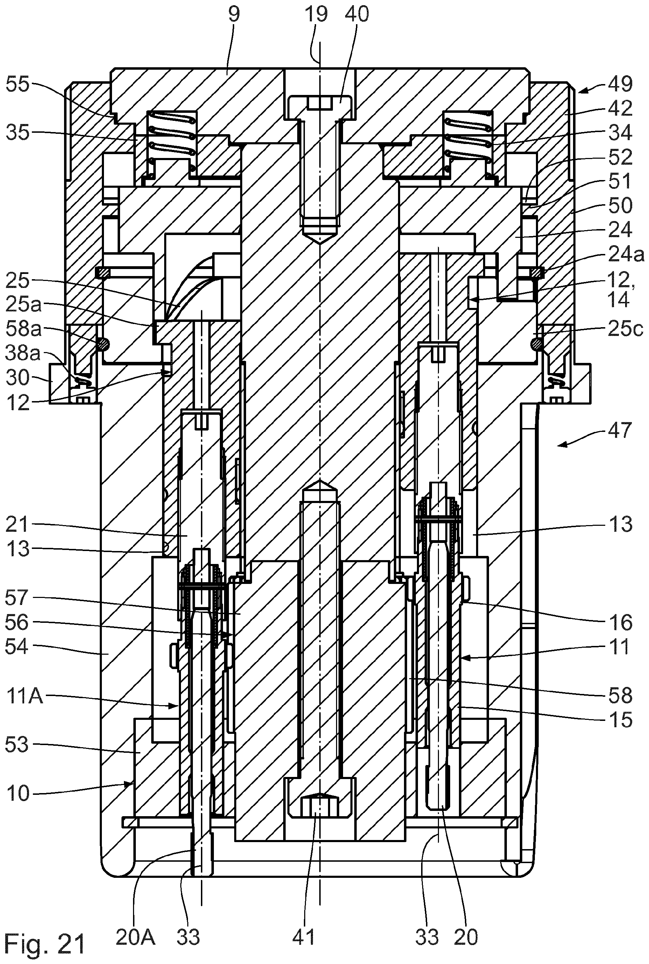

Fig. 20 zeigt das Mehrfachwerkzeug 47 in einer Auswahlposition der kopfseitigen Komponenten, in der eine Auswahl des aktiven Gewindeschneiders 11A unter den Gewindeschneidern 11 des Mehrfachwerkzeugs 47 über eine Werkzeug-Auswahleinrichtung 49 ermöglicht ist. Fig. 21 zeigt das Mehrfachwerkzeug 47 in einer Antriebsposition, in der ein Antrieb des aktiven Gewindeschneiders über eine Werkzeug-Antriebseinrichtung möglich ist, die beim Mehrfachwerkzeug 47 gleichzeitig einen Auswahlantrieb der Werkzeug-Auswahleinrichtung 49 darstellt.

In der Auswahlposition nach Fig. 20 wirkt eine kopfseitige Zahnkranz-Gehäusehülse 50 mit einem nicht dargestellten Auswahlritzel des Auswahlantriebs zusammen. Von der Zahnkranz-Gehäusehülse 50 erstrecken sich Kupplungszähne 51 radial nach innen. In der Auswahlposition nach Fig. 20 wirken die Kupplungszähne 51 drehfest zum Drehen um die Gehäuse-Längsachse 19 mit Kupplungsaufnahmen 52 der Auswahlkulisse 24 zusammen.

Die Auswahlkulisse 24 ist wiederum drehfest mit dem Auswahlring 25c verbunden. Zwischen diesen beiden, in Umfangsrichtung um die Gehäuse-Längsachse 19 komplementär bogenförmig zueinander ausgeführten Komponenten liegen wiederum die Auswahlstifte 25a der Gewindeschneider-Einheiten 11.

Beim Mehrfachwerkzeug 47 sind untere Führungshülsen 53 für die Gewindeschneider-Einheiten 11 lagefest mit einer das Gewindeschneider-Magazin 10 aufnehmenden äußeren Gehäusehülse 54 verbunden. Diese Gehäusehülse 54 dient als ortsfeste, also nicht angetriebene Aufnahme des Gewindeschneider-Magazins 10.

Bei der Auswahl, also bei einer Betätigung der Auswahleinrichtung 49, drehen sich die Zahnkranz-Gehäusehülse 50 und die Auswahlkulisse 24 zusammen mit dem Auswahlring 25c um die Gehäuse-Längsachse 19. Das Gewindeschneider-Magazin 10 bleibt drehfest. Über den sich bei der Auswahl drehenden Auswahlbogen 25 wird dann der aktive Gewindeschneider 11A ausgewählt, wobei sich die Gewindeschneider 11 entsprechend der Drehung des Auswahlbogens 25 ausschließlich in axialer Richtung heben oder senken, aber hinsichtlich ihrer Umfangsposition um die Gehäuse-Längsachse 19 fixiert bleiben. Sobald der gewünschte aktive Gewindeschneider 11A ausgewählt ist, stoppt der Auswahlantrieb.

Fig. 21 zeigt das Mehrfachwerkzeug 47 in der Antriebsposition. In dieser ist der Werkzeugkopf 9 über einen Stößel der Revolverpresse axial verlagert, so dass über eine Kupplungszahn-/Kupplungsaufnahme-Verbindung 55 eine drehfeste Verbindung zwischen der Zahnkranz-Gehäusehülse 50 und dem Werkzeugkopf 9 geschaffen ist. Über die Schraube 40 ist der Werkzeugkopf 9 seinerseits drehfest mit einem Antriebskern bzw. einer Antriebswelle 56 verbunden. Der Antriebskern 56 durchtritt das Mehrfachwerkzeug 47 zentral. Ein unterer, dem Werkzeugkopf 9 abgewandter Kernabschnitt 57 des Antriebskerns 56 weist einen äußeren Zahnkranzabschnitt 58 auf, der Teil der Gewindeschneider-Antriebseinrichtung 27 des Mehrfachwerkzeugs 47 ist und dessen Funktion derjenigen der Innenverzahnung 17 des oben beschriebenen Mehrfachwerkzeugs 5 entspricht. Der Zahnkranzabschnitt 58 kämmt wiederum mit der Außenverzahnung 16 der Gewindeschneider-Einheiten 11. Über eine Drehung der Zahnkranz-Gehäusehülse 50 erfolgt in der Antriebsposition nach Fig. 21 also ein Antrieb der Gewindeschneider 11 und insbesondere des aktiven Gewindeschneiders 11A.

In der Antriebsposition sind die Kupplungszähne 51 der Zahnkranz-Gehäusehülse 50 so verlagert, dass sie außer Eingriff mit den Kupplungsaufnahmen 52 der Auswahlkulisse 24 sind. Die Auswahlkulisse 24 dreht sich daher beim Verdrehen der Zahnkranz-Gehäusehülse 50 in der Antriebsposition nicht mit.

Zusätzlich hat das Mehrfachwerkzeug 47 zwischen der Zahnkranz-Gehäusehülse 50 und dem Auswahlring 25c eine weitere Kupplung 58a. Die Kupplung 58a ist in der Auswahlposition nach Fig. 20 ausgekuppelt und in der Antriebsposition nach Fig. 21 eingekuppelt. Ein Kupplungsring der Kupplung 58a, der eine drehfeste Kupplungskomponente darstellt, bewirkt durch reibschlüssige Anlage am Auswahlring 25c in der eingekuppelten Stellung, dass in der Antriebsposition beim Verdrehen der Zahnkranz-Gehäusehülse 50 keine unerwünschte Verdrehung der Auswahlkulisse 24 erfolgt.

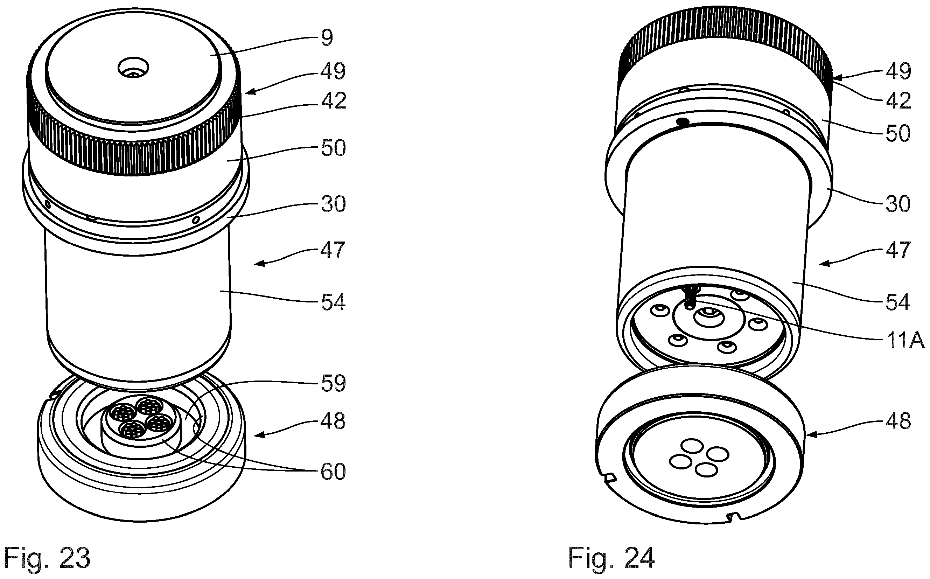

Die Fig. 23 bis 25 zeigen Details des Werkstück-Gegenhalters 48. Dieser hat vergleichbar zum Werkstück-Gegenhalter 7 eine Ringausnehmung 59, in die beim Gewindeschneiden der aktive Gewindeschneider 11A nach Durchdringen des Werkstücks eindringen kann, ohne mit dem Werkstück-Gegenhalter 48 in Kontakt zu kommen.

Diese Ringausnehmung hat auflageseitig, also dort, wo der Werkstück-Gegenhalter 48 dem Mehrfachwerkzeug 47 zugewandt ist, umlaufende Fasen 60.

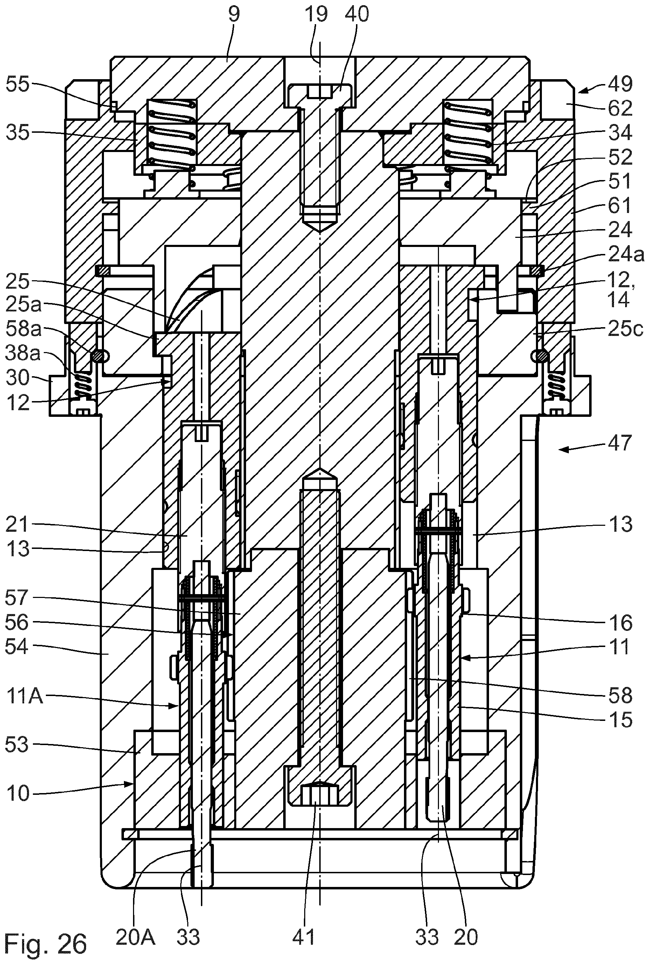

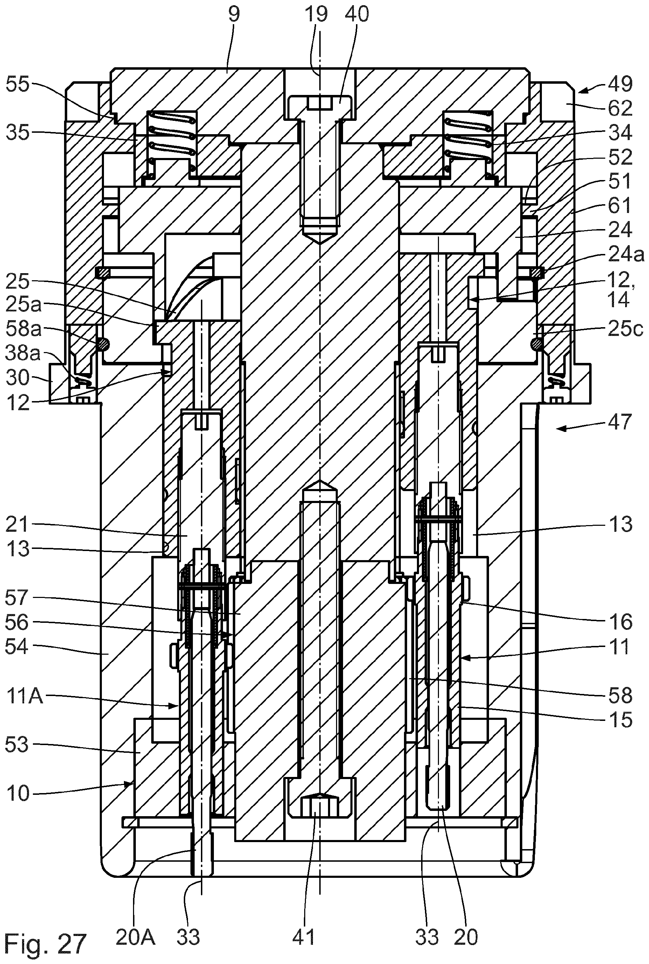

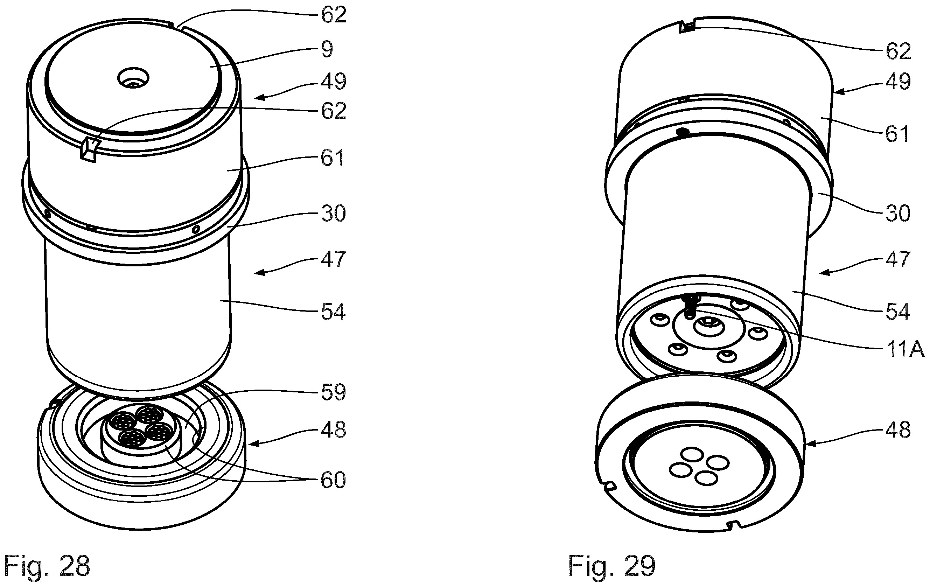

Anhand der Fig. 26 bis 29 wird nachfolgend eine weitere Ausführung eines Mehrfachwerkzeugs 47 beschrieben, welches anstelle des Mehrfachwerkzeugs 47 nach den Fig. 20 bis 25 zum Einsatz kommen kann.

Das Mehrfachwerkzeug 47 nach den Fig. 26 bis 29 unterscheidet sich von demjenigen nach den Fig. 20 bis 25 ausschließlich in der Ausgestaltung einer kraftübertragenden Gehäusehülse 61, die anstelle der Zahnkranz-Gehäusehülse 50 zum Einsatz kommt. Diese kraftübertragende Gehäusehülse 61 hat anstelle eines Zahnkranzes kopfseitige Zahnnuten 62, in die entsprechende Antriebszähne eines Auswahl- bzw. Gewindeschneid-Antriebs eingreifen können.

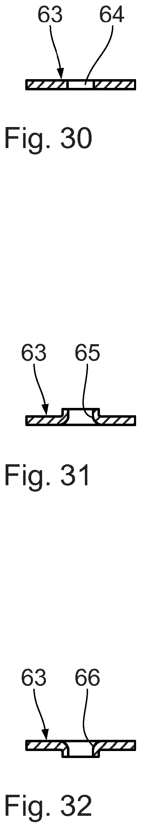

Anhand der Fig. 30 bis 32 werden nachfolgend Blechgeometrien erläutert, in denen Gewinde mit Hilfe der vorstehend beschriebenen Mehrfachwerkzeuge erzeugt werden können.

Fig. 30 zeigt einen Ausschnitt eines Werkstücks 63 um ein Gewindeloch 64. In das Gewindeloch 64 greift beim Gewindeformen der Formabschnitt des aktiven Gewindeschneiders 11A ein.

Fig. 31 zeigt eine Variante eines Gewindelochs in Form eines Gewindedurchzugs 65, dessen Kragen dem jeweiligen Mehrfachwerkzeug zugewandt ist.

Fig. 32 zeigt als weitere Variante eines Gewindelochs einen Gewindedurchzug 66, dessen Kragen dem Werkstück-Gegenhalter 48 zugewandt ist.

Die Fasen 60 im Werkstück-Gegenhalter 48 ermöglichen es nach der Formung eines Gewindes in das Gewindeloch 66 das Werkstück 63 relativ zum Werkstück-Gegenhalter 48 lateral zu verlagern, wobei der gegenhalterseitige Kragen des Gewindedurchzugs 66 auf der jeweiligen Fase 60 wie auf einer Rampe gleitet.

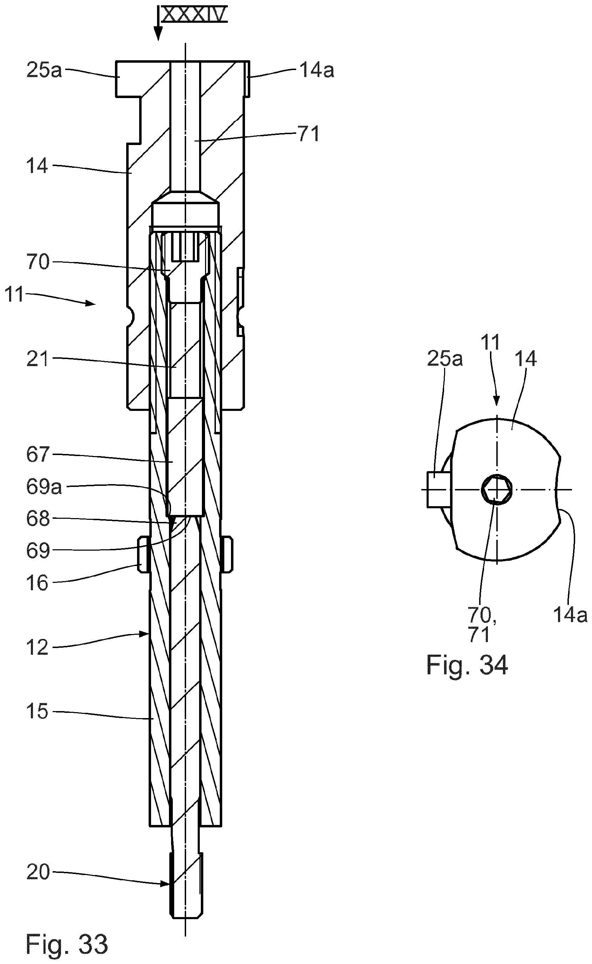

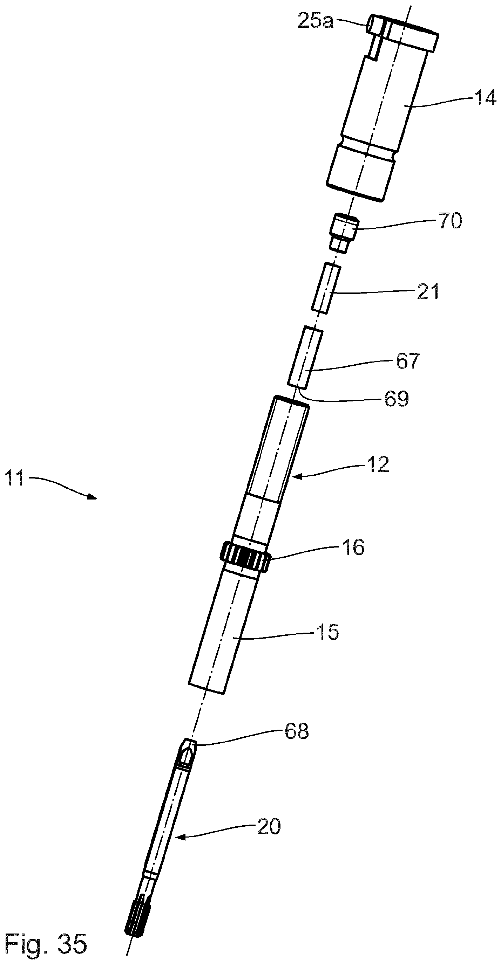

Anhand der Figuren 33 bis 35 wird nachfolgend eine weitere Ausführung einer Gewindeschneider-Einheit 11 erläutert, die anstelle der vorstehend beschriebenen Gewindeschneider-Einheiten bei den Ausführungen der Mehrfachwerkzeuge 5, 47 nach den Figuren 9, 20 und 26 zum Einsatz kommen kann. Komponenten und Funktionen, die denjenigen entsprechen, die vorstehend unter Bezugnahme auf die Figuren 1 bis 32 bereits erläutert wurden, tragen die gleichen Bezugsziffern und werden nicht nochmals im einzelnen erläutert.

Bei der Gewindeschneider-Einheit 11 nach Figur 33 ist der stiftförmige Gewindeschneider 20, der zum Formen des Gewindes in das Werkstück dient, auf andere Weise mit der Gewindeschneider-Leitspindelhülse 15 verbunden, als dies bei den Gewindeschneidern 20 der zuvor beschriebenen Ausführungen der Gewindeschneider-Einheiten 11 der Fall ist. Bei diesen zuvor beschriebenen Ausführungen sind die Gewindeschneider 20 in der Gewindeschneider-Leitspindelhülse 15 mit Hilfe eines Sicherungsrings befestigt.

Bei der Ausführung nach den Figuren 33 bis 35 ist der Gewindeschneider 20 über einen Dauermagneten 67 axial in der Gewindeschneider-Leitspindelhülse 15 fixiert. Ein Gewindeschneiderkopf 68 des Gewindeschneiders 20 liegt dabei stirnseitig an einer ihm zugewandten Endfläche 69 des Dauermagneten 67 an. Im Bereich des Gewindeschneiderkopfes 68 verjüngt sich der Gewindeschneider 20, hat also im Bereich der Anlage an der Dauermagnet-Endfläche 69 nicht den gleichen Querschnitt wie im sonstigen in der Leitspindelhülse 15 geführten Verlauf, sondern einen verjüngten Querschnitt.

Die Dauermagnet-Endfläche 69 ist in der in der Figur 33 gezeigten Position über die Vorspannfeder 21 in Form eines zylindrischen PU-Elastomerblocks vorgespannt. Die Dauermagnet-Endfläche 69 stützt sich in dieser Position gegen die Vorspannung der Vorspannfeder 21 an einer Umfangsstufe 69a der Leitspindelhülse 15 ab.

Über eine Klemmschraube 70, die kopfseitig in die Leitspindelhülse 15 eingeschraubt ist, ist die Vorspannfeder 21 gegen den Dauermagneten 67 vorgespannt. Die Vorspannfeder 21 liegt dabei zwischen einer endseitigen Stirnfläche der Klemmschraube 70 und einer dieser zugewandten weiteren Endfläche des Dauermagneten 67.

Von oben her zugänglich ist ein Schraubkopf der Klemmschraube 70 über einen durch den Hülsenkopf 14 verlaufenden Kanal 71.

Der stiftförmige Gewindeschneider 20 ist drehfest mit der Leitspindelhülse 15 und damit mit der gesamten Einsatzhülse 12 verbunden.

Soweit die Gewindeschneider-Einheit 11 nach den Figuren 33 bis 35 zum Ausformen eines Gewindes in einem Werkstück ausgewählt ist, sorgt die Vorspannfeder 21 für eine Federwirkung in axialer Richtung und damit für eine Vergleichmäßigung des Gewindeform-Vorgangs.

Bei unebenen Werkstücken kann es vorkommen, dass beim Gewindeformen auf den Gewindeschneider eine Axialkraft in der Figur 33 nach unten ausgeübt wird. Soweit diese Axialkraft eine über die Magnetstärke des Dauermagneten 67 vorgebbare Grenzkraft überschreitet, löst sich der Gewindeschneider 20 von der Endfläche 69, sodass eine derartige Grenzkraftüberschreitung nicht zu einer Beschädigung der aktiven Gewindeschneider-Einheit 11A führt. Sobald der Gewindeschneider 20, nachdem er sich vom Dauermagneten 67 gelöst hat, wieder vom Werkstück freikommt beziehungsweise die Grenzkraft den Grenzwert wieder unterschreitet, zieht der Dauermagnet 67 den Gewindeschneiderkopf 68 wieder an und es kommt wieder zur axial fixierenden Anlage des Gewindeschneiderkopfes 68 an der Dauermagnet-Endfläche 69.

## Patentansprüche

1. Mehrfachwerkzeug (5; 47) für eine Stanzvorrichtung (1), insbesondere für eine Revolverstanzpresse,
- mit einem Gehäuse,
- mit einem mit der Stanzvorrichtung (1) zusammenwirkenden Werkzeugkopf (9),
- mit einem mit dem Werkzeugkopf (9) verbundenen Gewindeschneider-Magazin (10) mit einer Mehrzahl von Gewindeschneidem (20),
- mit einer Auswahleinrichtung (22) zur Auswahl eines aktiven, mit einem Werkstück (8) zum Gewindeschneiden zusammenwirkenden Gewindeschneiders (20A), und
- mit einer Gewindeschneider-Antriebseinrichtung (27) zum Antrieb des aktiven Gewindeschneiders (20A),
**dadurch gekennzeichnet, dass**
- die Auswahleinrichtung (22) eine Kulissenführung (24, 25) aufweist, die dazu ausgebildet ist den aktiven Gewindeschneider (20A) relativ zu den anderen Gewindeschneidern (20) axial in Richtung auf das Werkstück (8) zu zu verlagern.

2. Mehrfachwerkzeug (5; 47) nach Anspruch 1, **dadurch gekennzeichnet, dass** die Auswahleinrichtung (22) derart gestaltet ist, dass eine Auswahl durch Verdrehen eines äußeren Gehäuseelements (30) relativ zu einem weiteren Gehäuseelement (23) erfolgt.

3. Mehrfachwerkzeug (5; 47) nach Anspruch 1 oder 2, **dadurch gekennzeichnet, dass** die Auswahleinrichtung (22) derart gestaltet ist, dass eine Auswahl über einen Auswahlantrieb (27) erfolgt.

4. Mehrfachwerkzeug (5; 47) nach Anspruch 3, **dadurch gekennzeichnet, dass** die Gewindeschneider-Antriebseinrichtung (27) gleichzeitig den Auswahlantrieb darstellt.

5. Mehrfachwerkzeug (5; 47) nach einem der Ansprüche 1 bis 4, **dadurch gekennzeichnet, dass** die Antriebseinrichtung (27) eine rotierende Komponente (18; 56) mit einer Verzahnung (17; 58) aufweist, die mit einem Gewindeschneidantrieb in Wirkverbindung steht, wobei die Verzahnung (17; 58) mit einer Außenverzahnung (16) des Gewindeschneiders (20) zusammenwirkt.

6. Mehrfachwerkzeug (5; 47) nach Anspruch 5, **gekennzeichnet durch** eine Ausgestaltung der Antriebseinrichtung derart, dass die Verzahnung (17; 58) in einer aktiven Stellung des dann aktiven Gewindeschneiders (20A) und in einer deaktiven Stellung des dann deaktiven Gewindeschneiders (20) mit der Außenverzahnung (16) in Wirkverbindung steht.

7. Mehrfachwerkzeug (5; 47) nach einem der Ansprüche 1 bis 6, **dadurch gekennzeichnet, dass** der Werkzeugkopf (9) an seiner oberen, einem Betätigungsstößel (4) zugewandten Seite eine Mehrzahl von in Betätigungsrichtung verlagerbaren Formschlusskörpern (41a) aufweist, die so angeordnet und ausgeführt sind, dass sie in einer Betätigungsstellung des Betätigungsstößels (4) eine formschlüssige Verbindung des Werkzeugkopfes (9) mit dem Betätigungsstößel (4) gewährleisten.

8. Mehrfachwerkzeug (5; 47) nach Anspruch 7, **dadurch gekennzeichnet, dass** die Formschlusskörper (41a) als elastisch entgegen einer Betätigungsrichtung des Betätigungsstößels (4) vorgespannte Bolzen ausgeführt sind, wobei in der Betätigungsstellung des Betätigungsstößels (4) mindestens einer der Bolzen entgegen seiner Vorspannung verlagert ist.

9. Mehrfachwerkzeug (5; 47) nach einem der Ansprüche 1 bis 8, **dadurch gekennzeichnet, dass** der Werkzeugkopf (9) mindestens eine Drucksensor-Anlagefläche zum Zusammenwirken mit einem Drucksensor (41c, 41d) des Betätigungsstößels (4) aufweist.

10. Mehrfachwerkzeug (5; 47) nach einem der Ansprüche 1 bis 9, **dadurch gekennzeichnet, dass** das Gewindeschneider-Magazin (10) eine Mehrzahl von Gewindeschneider-Einheiten (11) umfasst, die jeweils aufweisen einen der Gewindeschneider (20, 20A), welcher stiftförmig ausgebildet ist, und eine drehantreibbare Einsatzhülse (12), mit der der Gewindeschneider (20) drehfest verbunden ist, wobei der Gewindeschneider (20) in der Einsatzhülse (12) mit Hilfe eines Magneten (67) gehalten ist, und wobei eine Haltekraft des Magneten (67) so gewählt ist, dass sich der Gewindeschneider (20) von der Einsatzhülse (12) bei Überschreiten einer vorgegebenen Grenzkraft löst.

11. Mehrfachwerkzeug (5; 47) nach Anspruch 10, **dadurch gekennzeichnet, dass** die Gewindeschneider-Einheit (11, 11A) eine Vorspannfeder (21) zur axial federnden Lagerung des Gewindeschneiders (20) in der Einsatzhülse (12) aufweist.

## Claims

1. Multiple tool (5; 47) for a punching device (1), in particular for a turret punch press, comprising
- a housing,
- a tool head (9) interacting with the punching device (1),
- a thread cutter magazine (10) comprising a plurality of thread cutters (20), the thread cutter magazine (10) being connected to the tool head (9),
- a selection device (22) for selecting an active thread cutter (20A) which interacts with a workpiece (8) for thread cutting, and
- a thread cutter drive device (27) for driving the active thread cutter (20A),
**characterized in that**
- the selection device (22) has a guide device (24, 25), which is configured to displace the active thread cutter (20A) axially relative to the other thread cutters (20) in the direction towards the workpiece (8).

2. Multiple tool (5; 47) according to claim 1, **characterized in that** the selection device (22) is configured in such a way that a selection takes place by rotating an outer housing element (30) in relation to another housing element (23).

3. Multiple tool (5; 47) according to claim 1 or 2, **characterized in that** the selection device (22) is configured in such a way that a selection takes place by means of a selection drive (27).

4. Multiple tool (5; 47) according to claim 3, **characterized in that** the thread cutter drive device (27) is at the same time the selection drive.

5. Multiple tool (5; 47) according to one of claims 1 to 4, **characterized in that** the drive device (27) has a rotating component (18; 56) comprising a toothing (17; 58) which is actively connected to a thread cutting drive, the toothing (17; 58) interacting with an external toothing (16) of the thread cutter (20).

6. Multiple tool (5; 47) according to claim 5, **characterized by** a configuration of the drive device such that the toothing (17; 58) is actively connected to the external toothing (16) both in an active position of the thread cutter (20A) that is active at that time and in a non-active position of the thread cutter (20) that is non-active at that time.

7. Multiple tool (5; 47) according to one of claims 1 to 6, **characterized in that** on its upper side facing an actuating ram (4), the tool head (9) has a plurality of positive fit bodies (41a) displaceable in an actuating direction, the positive fit bodies (41a) being arranged and configured in such a way as to ensure a positive fit between the tool head (9) and the actuating ram (4) in an actuating position of the actuating ram (4).

8. Multiple tool (5; 47) according to claim 7, **characterized in that** the positive fit bodies (41a) are configured as bolts which are resiliently biased counter to an actuating direction of the actuating ram (4), with at least one of the bolts being displaced counter to its bias in the actuating position of the actuating ram (4).

9. Multiple tool (5; 47) according to one of claims 1 to 8, **characterized in that** the tool head (9) has at least one pressure sensor contact surface for interaction with a pressure sensor (41c, 41d) of the actuating ram (4).

10. Multiple tool (5; 47) according to one of claims 1 to 9, **characterized in that** the thread cutter magazine (10) hat a plurality of thread cutter units (11), which each comprise one of the thread cutters (20, 20A), which is configured to be pin-shaped, and a rotatably drivable insert sleeve (12) with which the thread cutter (20) is non-rotatably connected, wherein the thread cutter (20) is held in the insert sleeve (12) by means of a magnet (67), and wherein a holding force of the magnet (67) is selected such that the thread cutter (20) detaches from the insert sleeve (12) when a predefined threshold force is exceeded.

11. Multiple tool (5; 47) according to claim 10, **characterized in that** the thread cutter unit (11, 11A) has a bias spring (21) for mounting the thread cutter (20) in the insert sleeve (12) in an axially resilient manner.

## Revendications

1. Outil multiple (5 ; 47) pour un dispositif de poinçonnage (1), en particulier pour une presse de poinçonnage à tourelle, comprenant
- un boîtier,
- une tête d'outil (9) coopérant avec le dispositif de poinçonnage (1),
- un magasin de tarauds (10) relié à la tête d'outil (9) et comportant une pluralité de tarauds (20),
- un dispositif de sélection (22) pour sélectionner un taraud actif (20A) coopérant avec une pièce à usiner (8) pour le taraudage, et
- un dispositif d'entraînement de taraud (27) pour entraîner le taraud actif (20A),
**caractérisé en ce que**
- le dispositif de sélection (22) comprend un guide à coulisse (24, 25) qui est conçu pour déplacer le taraud actif (20A) axialement par rapport aux autres tarauds (20) en direction de la pièce à usiner (8).

2. Outil multiple (5 ; 47) selon la revendication 1, **caractérisé en ce que** le dispositif de sélection (22) est conçu de telle sorte qu'une sélection s'effectue par rotation d'un élément de boîtier extérieur (30) par rapport à un autre élément de boîtier (23).

3. Outil multiple (5 ; 47) selon la revendication 1 ou 2, **caractérisé en ce que** le dispositif de sélection (22) est conçu de telle sorte qu'une sélection s'effectue par l'intermédiaire d'un entraînement de sélection (27).

4. Outil multiple (5 ; 47) selon la revendication 3, **caractérisé en ce que** le dispositif d'entraînement de taraud (27) constitue en même temps l'entraînement de sélection.

5. Outil multiple (5 ; 47) selon l'une quelconque des revendications 1 à 4, **caractérisé en ce que** le dispositif d'entraînement (27) présente un composant rotatif (18 ; 56) avec une denture (17 ; 58) qui est en liaison active avec un entraînement de taraudage, la denture (17 ; 58) coopérant avec une denture extérieure (16) du taraud (20).

6. Outil multiple (5 ; 47) selon la revendication 5, **caractérisé par** une conception du dispositif d'entraînement telle que la denture (17 ; 58) est en liaison active avec la denture extérieure (16) dans une position active du taraud (20A) alors actif et dans une position désactivée du taraud (20) alors désactivé.

7. Outil multiple (5 ; 47) selon l'une quelconque des revendications 1 à 6, **caractérisé en ce que** la tête d'outil (9) présente, sur son côté supérieur tourné vers un poussoir d'actionnement (4), une pluralité de corps à engagement positif (41a) déplaçables dans la direction d'actionnement, qui sont disposés et réalisés de telle sorte que, dans une position d'actionnement du poussoir d'actionnement (4), ils garantissent une liaison par engagement positif de la tête d'outil (9) avec le poussoir d'actionnement (4).

8. Outil multiple (5 ; 47) selon la revendication 7, **caractérisé en ce que** les corps à engagement positif (41a) sont réalisés sous forme de boulons précontraints élastiquement dans le sens opposé à une direction d'actionnement du poussoir d'actionnement (4), au moins l'un des boulons étant déplacé dans le sens opposé à sa précontrainte dans la position d'actionnement du poussoir d'actionnement (4).

9. Outil multiple (5 ; 47) selon l'une quelconque des revendications 1 à 8, **caractérisé en ce que** la tête d'outil (9) présente au moins une surface d'appui de capteur de pression pour coopérer avec un capteur de pression (41c, 41d) du poussoir d'actionnement (4).

10. Outil multiple (5 ; 47) selon l'une quelconque des revendications 1 à 9, **caractérisé en ce que** le magasin de tarauds (10) comprend une pluralité d'unités de taraudage (11) qui présentent chacune l'un des tarauds (20, 20A), qui est réalisé en forme de broche, et un manchon d'insertion (12) pouvant être entraîné en rotation, avec laquelle le taraud (20) est relié de manière solidaire en rotation, le taraud (20) étant maintenu dans le manchon d'insertion (12) à l'aide d'un aimant (67), et une force de maintien de l'aimant (67) étant choisie de telle sorte que le taraud (20) se détache du manchon d'insertion (12) lorsqu'une force limite prédéfinie est dépassée.

11. Outil multiple (5 ; 47) selon la revendication 10, **caractérisé en ce que** l'unité de taraudage (11, 11A) présente un ressort de précontrainte (21) pour le montage élastique axial du taraud (20) dans le manchon d'insertion (12).
